# EUROPEAN PATENT APPLICATION

(11) **EP 4 424 642 A1**
(43) Date of publication of application: **04.09.2024**
(21) Application number: 22887067.1
(22) Date of filing: 26.10.2022
(51) Int. Cl.: C01G 41/00, B32B 9/00, B82Y 30/00, C09K 3/00, G02B 5/22, G02B 5/23, G02B 5/26, G02B 5/28

(54) **MOLECULAR FILM, MOLECULAR FILM ASSEMBLY, INFRARED RAY SHIELDING FILM, AND STRUCTURE**

(30) Priority: 29.10.2021 JP 2021178333
(71) Applicant: SUMITOMO METAL MINING CO., LTD., Tokyo 105-8716 (JP); National University Corporation Tokai National Higher Education and Research System, Nagoya-shi, Aichi 464-8601 (JP)
(72) Inventor: TSUNEMATSU, Hirofumi, Ichikawa-shi, Chiba 272-8588 (JP); OSADA, Minoru, Nagoya-shi, Aichi 464-8601 (JP)
(74) Representative: Jones, Nicholas Andrew
(86) International application number: PCT/JP2022/039945
(87) International publication number: WO 2023/074742

(57) **Abstract**

A molecular film includes: a tungsten-oxygen octahedral block.

## Description

### TECHNICAL FIELD

The present invention relates to a molecular film, a molecular film assembly, an infrared-shielding film, and a structure.

### BACKGROUND ART

Patent Document 1 discloses an infrared-shielding material fine particle dispersion, which is formed by dispersing infrared-shielding material fine particles in a medium, wherein the infrared-shielding material fine particle dispersion contains tungsten oxide fine particles and/or composite tungsten oxide fine particles, and wherein a particle diameter of the infrared-shielding material fine particles is 1 nm or more and 800 nm or less.

Patent Document 2 discloses a solar shielding laminated structure including an intermediate layer containing fine particles having a solar shielding function interposed between two laminated plates selected from plate glass, plastic, and plastic containing fine particles having a solar shielding function, wherein the fine particles having the solar shielding function are composed of fine particles of a tungsten oxide and/or fine particles of a composite tungsten oxide.

Patent Document 3 discloses a transparent conductive film including a tungsten oxide or/and a composite tungsten oxide, wherein a maximum value of transmittance is 10% or more and less than 92% in a wavelength range of 400 nm or more and 780 nm or less, and a surface resistance (sheet resistance) of the film is 1.0×10¹⁰ Ω/□ or less.

### RELATED-ART DOCUMENT

### Patent Document

Patent Document 1: International Publication No. WO 2005/037932
Patent Document 2: International Publication No. WO 2005/087680
Patent Document 3: Japanese Laid-Open Patent Publication No. 2006-96656

### Non-Patent Document

Non-Patent Document 1: ACS Nano 2020,14,15216

### SUMMARY OF THE INVENTION

### Technical Problem

As disclosed in Patent Documents 1 to 3, a tungsten oxide and a composite tungsten oxide are known to function as infrared-shielding materials, transparent conductive films, and the like, and can be used in various applications.

New filmic materials containing tungsten and oxygen have been sought for the purpose of developing new functions and for new applications.

One aspect of the present invention is to provide a molecular film containing tungsten and oxygen.

### Solution to Problem

According to one aspect of the present invention, a molecular film including a tungsten-oxygen octahedral block is provided.

### Advantageous Effects of Invention

According to one aspect of the present invention, a molecular film containing tungsten and oxygen can be provided.

### BRIEF DESCRIPTION OF THE DRAWINGS

[FIG. 1]

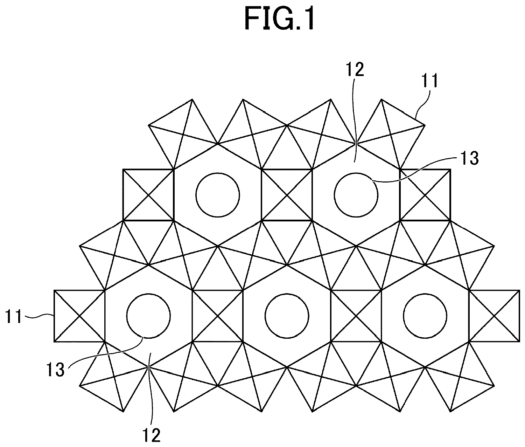

   FIG. 1 is an explanatory diagram of a crystal structure of hexagonal tungsten bronze, an example of a composite tungsten oxide.
[FIG. 2A]

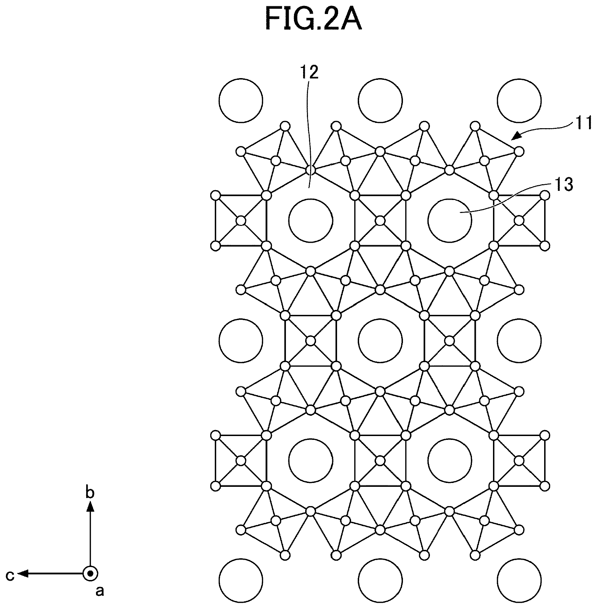

   FIG. 2A is an explanatory diagram of a crystal structure of Cs₄W₁₁O₃₅.
[FIG. 2B]

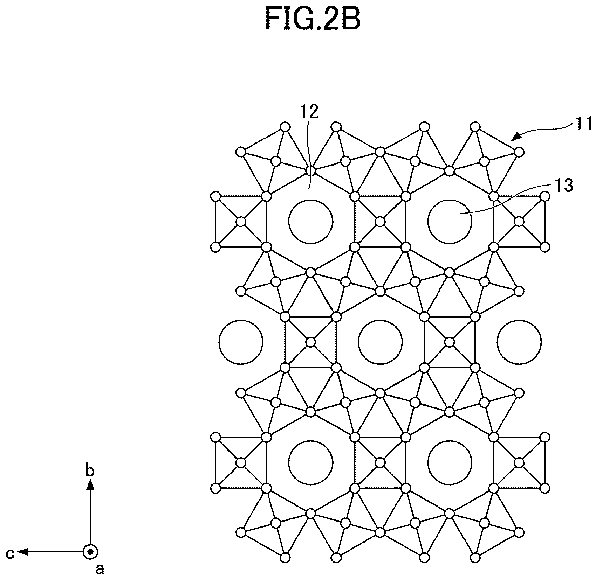

   FIG. 2B is an explanatory diagram of a structural example of a molecular film obtained from Cs₄W₁₁O₃₅.
[FIG. 3A]

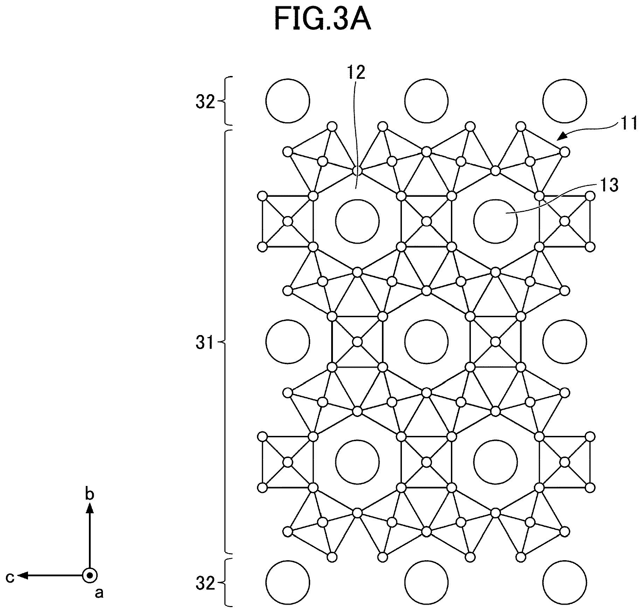

   FIG. 3A is an explanatory diagram of a crystal structure of Rb₄W₁₁O₃₅.
[FIG. 3B]

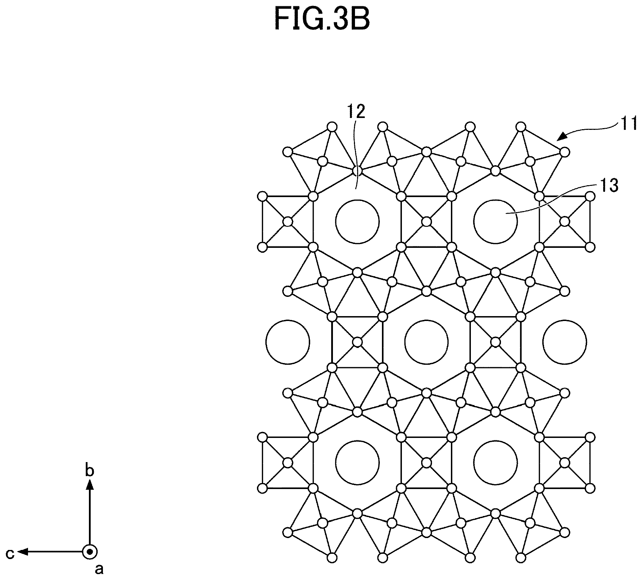

   FIG. 3B is an explanatory diagram of a structural example of a molecular film obtained from Rb₄W₁₁O₃₅.
[FIG. 4A]

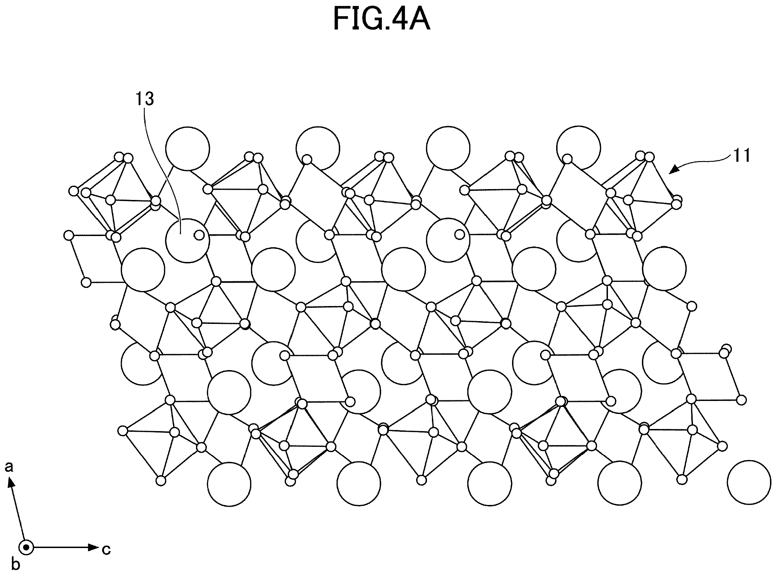

   FIG. 4A is an explanatory diagram of a crystal structure of Cs₆W₁₁O₃₆.
[FIG. 4B]

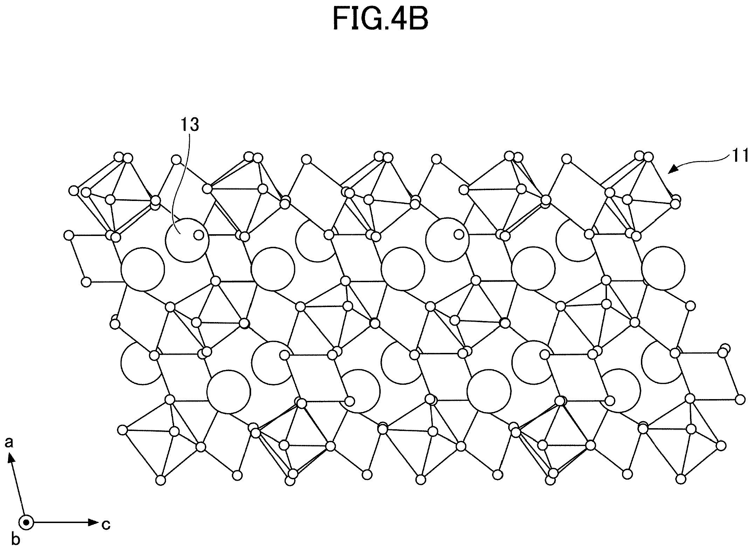

   FIG. 4B is an explanatory diagram of a structural example of a molecular film obtained from Cs₆W₁₁O₃₆.
[FIG. 5A]

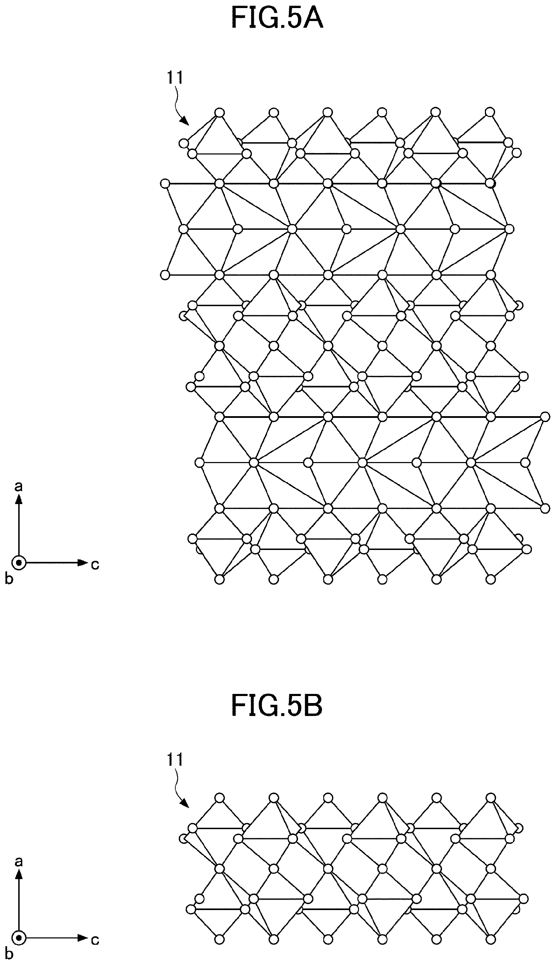

   FIG. 5A is an explanatory diagram of a crystal structure of B₁₂W₂O₉.
[FIG. 5B]
   FIG. 5B is an explanatory diagram of a structural example of a molecular film obtained from B₁₂W₂O₉.
[FIG. 6A]

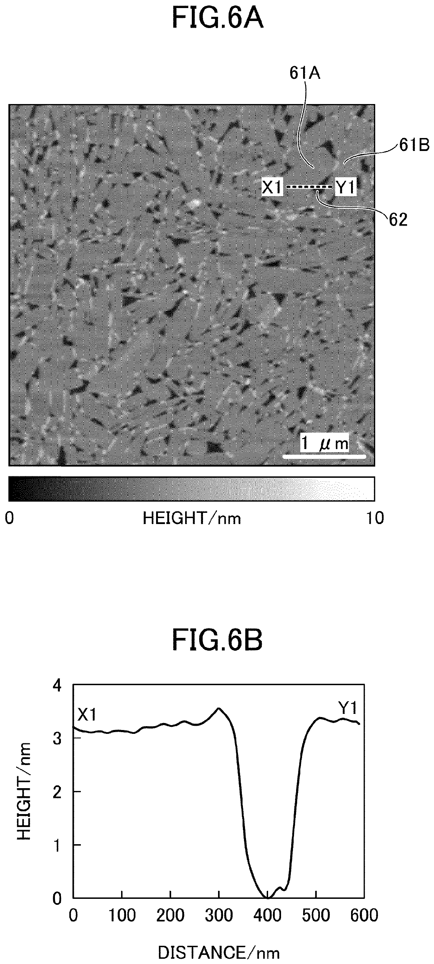

   FIG. 6A is an AFM image obtained by observing a surface of a molecular film assembly according to Example 7.
[FIG. 6B]
   FIG. 6B is a cross-sectional profile of the molecular film assembly according to Example 7.
[FIG. 7A]

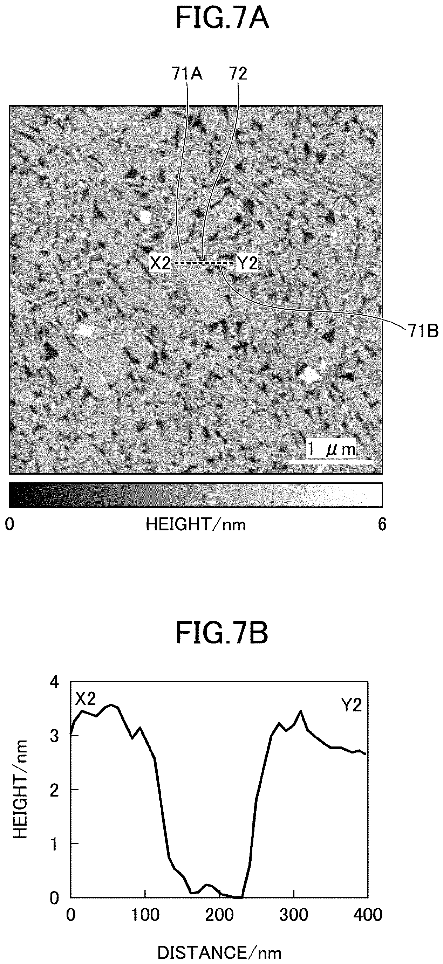

   [FIG. 7A is an AFM image obtained by observing a surface of a molecular film assembly after heat treatment according to Example 7.
[FIG. 7B]
   FIG. 7B is a cross-sectional profile of the molecular film assembly after heat treatment according to Example 7.
[FIG. 8]

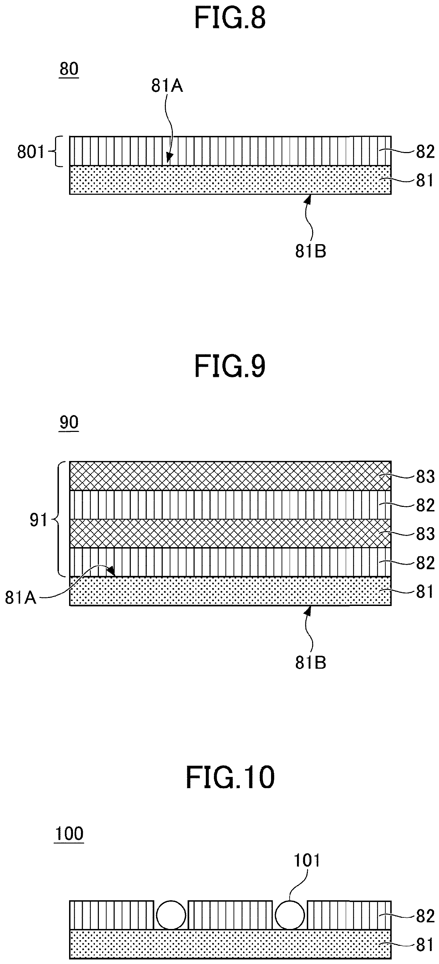

   FIG. 8 is a cross-sectional schematic diagram of an example of an infrared-shielding film according to a present embodiment.
[FIG. 9]
   FIG. 9 is a cross-sectional schematic diagram of an example of an infrared-shielding film according to a present embodiment.
[FIG. 10]
   FIG. 10 is a cross-sectional schematic diagram of an example of an infrared-shielding film according to a present embodiment.
[FIG. 11]

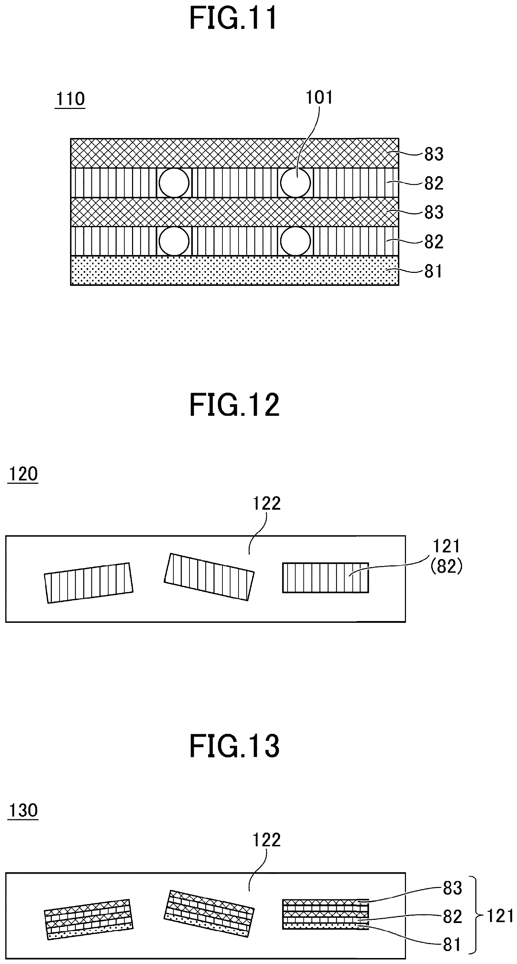

   FIG. 11 is a cross-sectional schematic diagram of an example of an infrared-shielding film according to a present embodiment.
[FIG. 12]
   FIG. 12 is a cross-sectional schematic diagram of an example of a structure according to a present embodiment.
[FIG. 13]
   FIG. 13 is a cross-sectional schematic diagram of an example of a structure according to a present embodiment.
[FIG. 14]

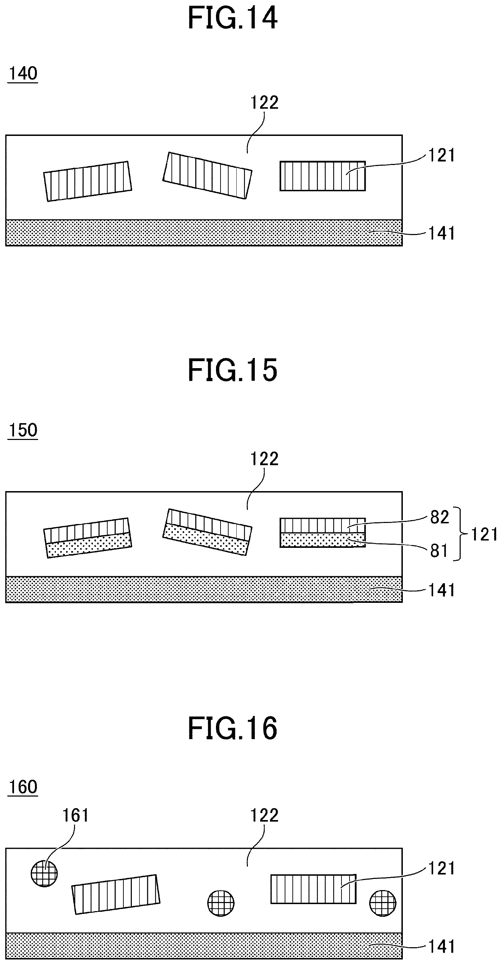

   FIG. 14 is a cross-sectional schematic diagram of an example of a structure according to a present embodiment.
[FIG. 15]
   FIG. 15 is a cross-sectional schematic diagram of an example of a structure according to a present embodiment.
[FIG. 16]
   FIG. 16 is a cross-sectional schematic diagram of an example of a structure according to a present embodiment.

### DESCRIPTION OF EMBODIMENTS

Hereinafter, the embodiments for carrying out the invention will be described with reference to the drawings, but the invention is not limited to the following embodiments, and various modifications and substitutions can be made to the following embodiments without departing from the scope of the invention.

### [Molecular Film and Molecular Film Assembly]

### (1) Configuration

### (1-1) Molecular Film

The molecular film according to the present embodiment may include tungsten-oxygen octahedral blocks. The molecular film according to the present embodiment may be composed only of the tungsten-oxygen octahedral blocks, but even in this case, it is not excluded that the molecular film contains unavoidable impurities mixed in during the manufacturing process and the like.

The molecular film according to the present embodiment and the tungsten-oxygen octahedral blocks included in the molecular film will be described with reference to FIG. 1, which is a schematic plan view.

FIG. 1 illustrates a crystal structure of hexagonal tungsten bronze including a plurality of tungsten-oxygen octahedral blocks 11, each of which is formed from a WO₆ unit. The tungsten-oxygen octahedral block 11 has a structure in which oxygen is arranged at the vertices of the octahedron and tungsten is arranged at the center of the octahedron. The molecular film according to the present embodiment may include a plurality of tungsten-oxygen octahedral blocks 11, for example, as illustrated in FIG. 1. The plurality of tungsten-oxygen octahedral blocks 11 may be arranged, for example, in a plane or in a straight line.

The molecular film according to the present embodiment may have a structure in which the basic skeleton is, for example, a repeating structure of tungsten-oxygen octahedral blocks.

As will be described later, the molecular film according to the present embodiment may also contain a composite tungsten oxide. In this case, for example, as illustrated in FIG. 1, a hexagonal void 12 is formed by assembling six tungsten-oxygen octahedral blocks 11 in the composite tungsten oxide. An M 13 contained in the composite tungsten oxide is placed in the void 12 to constitute one unit. The composite tungsten oxide may have a configuration in which a large number of this one unit is assembled.

For example, FIG. 2B is a structural example of a molecular film obtained from Cs₄W₁₁O₃₅ illustrated in FIG. 2A. FIG. 2B corresponds to the configuration of the molecular films obtained, for example, in Examples 3, 4, 7, and 8, which will be described later.

FIG. 3B is a structural example of a molecular film obtained from Rb₄W₁₁O₃₅ illustrated in FIG. 3A. FIG. 3B corresponds to the configuration of the molecular film obtained in Example 5, which will be described later. In FIGS. 2B and 3B, the M 13 is arranged in the hexagonal void 12 as described above. The M 13 is Cs in FIG. 2B. The M 13 is Rb in FIG. 3B.

Further, for example, FIG. 4B is a structural example of a molecular film obtained from Cs₆W₁₁O₃₆ illustrated in FIG. 4A. FIG. 4B corresponds to the configuration of the molecular films obtained in Examples 1 and 2, which will be described later. The molecular film illustrated in FIG. 4B has a pyrochlore structure, which is the same as that of CsW₂O₆, for example. The molecular film obtained from Cs_{8.5}W₁₅O₄₈ has a similar structure. In these structures, the M 13 is arranged in the hexagonal void formed by the tungsten-oxygen octahedral blocks 11 in a partial view, and hexagons of hexagonal voids and Ms are laminated in the vertical direction of the be plane while shifting in the c-axis direction of FIG. 4B.

The molecular film according to the present embodiment may also contain a tungsten oxide. In this case, the tungsten oxide may be formed by the tungsten-oxygen octahedral blocks or the like. As a configuration corresponding to this case, for example, FIG. 5B is a structural example of a molecular film obtained from Bi₂W₂O₉ illustrated in FIG. 5A. FIG. 5B corresponds to the configuration of the molecular film obtained in Example 6, which will be described later.

By including the tungsten-oxygen octahedral blocks, the molecular film according to the present embodiment can have excellent infrared-shielding performance due to infrared reflection. Further, by introducing oxygen defects into the tungsten-oxygen octahedral blocks, a molecular film with even excellent infrared-shielding performance due to infrared reflection can be obtained.

Materials containing free electrons can exhibit a reflection absorption response to electromagnetic waves around the solar radiation region with a wavelength of 200 nm to 2,600 nm due to plasma oscillation. Because the molecular film according to the present embodiment is a sheet-shaped conductive material, that is, a material containing free electrons, the reflection response is more pronounced than the absorption response among the reflection absorption responses to the electromagnetic waves such as infrared rays due to plasma oscillation. Therefore, the molecular film according to the present embodiment can exhibit infrared-shielding performance due to infrared reflection as described above.

Moreover, because the molecular film according to the present embodiment has the shape of a sheet, high infrared-shielding performance can be exhibited even when the film thickness is thin, for example. Further, compared with the case of using the infrared-shielding material fine particles disclosed in Patent Documents 1 and 2, light scattering of visible light can be reduced and visible light transparency can be improved.

The molecular film according to the present embodiment can exhibit the above-mentioned infrared shielding performance by containing the tungsten-oxygen octahedral blocks, and therefore may be crystalline or non-crystalline.

As will be described later, the molecular film according to the present embodiment can be produced by using, for example, a composite tungsten oxide or the like having a layered crystal structure as a raw material and peeling it down to one layer, which is the basic minimum unit of the crystal structure, by a soft chemical treatment. The molecular film according to the present embodiment may have the shape of a sheet having a thickness of 1 nm or more and 10 nm or less (equivalent to several to several tens of atoms). Depending on the conditions of the soft chemical treatment, the molecular film according to the present embodiment can be produced by peeling the raw material into two or three layers.

As described later, a plurality of molecular films according to the present embodiment can be assembled to form a molecular film assembly. The longer the length in the longitudinal direction of the molecular films included in the molecular film assembly according to the present embodiment is, and the higher the anisotropy with respect to the thickness, the higher the infrared shielding performance may be expected.

The length of the molecular film in the longitudinal direction can be controlled by adjusting the synthesis (firing) temperature of the composite tungsten oxide having a layered crystal structure before being peeled by the soft chemical treatment, or by using a single crystal of the composite tungsten oxide or the tungsten oxide. For example, it is possible to synthesize a molecular film in which the length in the longitudinal direction is adjusted within a range of 20 nm or more and 1 mm or less. Because even molecular films with various lengths in the longitudinal direction exhibit excellent infrared-shielding performance, the molecular film assembly according to the present embodiment that includes the molecular films can be applied as a general-purpose window material, for example.

The molecular film is flexible and may have the shape of a curved sheet when in a liquid or the like. Because the flexibility is maintained in a solid, the molecular film can be bent together with a flexible base material, for example, and the atomic arrangement and other structures in the molecular film are maintained without being destroyed when the film is bent.

The molecular film preferably has a thickness of 200 nm or less from the viewpoint of ensuring visible light transparency, more preferably 100 nm or less, even more preferably 50 nm or less, and further more preferably 10 nm or less.

### (1-2) Molecular Film Assembly

A plurality of molecular films according to the present embodiment may be assembled to form a molecular film assembly. That is, the molecular film assembly may include a plurality of molecular films.

The molecular film assembly according to the present embodiment may be composed only of the molecular films, or may be composed of a laminate of molecular films or the like. The molecular films may be in contact with each other or may be separated from each other. In other words, although the term "assemble" is used for convenience, the molecular films do not necessarily have to be in contact with each other. As illustrated in the AFM images of FIG. 6A and FIG. 7A, the molecular film assembly according to the present embodiment can be constructed by spreading the molecular films side-by-side on a smooth substrate, or can be constructed by combining lamination and spreading. In addition, the molecular film assembly according to the present embodiment can be constructed by combining the molecular films and infrared-shielding material particles.

FIG. 6A illustrates an AFM image of the molecular film assembly in which a large number of molecular films according to the present embodiment are spread side-by-side over a substrate. In the molecular film assembly according to the present embodiment, for example, as illustrated in FIG. 6A, a molecular film 61A and a molecular film 61B are spread side-by-side and arranged on the same plane, so that it is possible to make a molecular film assembly excellent in infrared-shielding performance due to infrared reflection. In addition, as illustrated in FIG. 6A, the molecular film assembly according to the present embodiment can have a gap 62 between the adjacent molecular films 61A and 61B, and can transmit, for example, radio waves through the gap.

FIG. 6B illustrates a cross-sectional profile of a line X1-Y1 of FIG. 6A. As illustrated in FIG. 6B, it was confirmed that the gap 62 between the molecular film 61A and the molecular film 61B was lower than the other parts. That is, it was confirmed from the AFM height measurement result that the molecular film assembly according to the present embodiment had a gap between the molecular films.

FIG. 7A illustrates an AFM image obtained by observing the molecular film assembly illustrated in FIG. 6A subjected to the heat treatment step described later. As before the heat treatment, a plurality of molecular films are spread side-by-side and arranged on the same plane, forming a molecular film assembly. FIG. 7B illustrates a cross-sectional profile of a line X2-Y2 of FIG. 7A. It was confirmed that a gap 72 between a molecular film 71A and a molecular film 71B was lower than the other parts, and that a gap existed between the molecular films.

Because the molecular film assembly according to the present embodiment has a gap between the molecular films as described above, the sheet resistance can be set to 10⁷ Ω/□ or more, for example, to make the film excellent in radio wave transmission. That is, the molecular film assembly according to the present embodiment can have both excellent infrared-shielding performance and radio wave transmission.

The molecular film assembly according to the present embodiment can be produced, for example, by laminating the molecular films or spreading the molecular films side-by-side on a smooth substrate. The molecular film assembly according to the present embodiment can also be obtained by a heat treatment of the molecular films after laminating or spreading side-by-side on the smooth substrate. In this case, it is preferable to perform the heat treatment under an inert gas atmosphere, a vacuum atmosphere, or a reducing atmosphere from the viewpoint of introducing oxygen defects into the tungsten-oxygen octahedral block of the molecular film to exhibit an excellent infrared-shielding function. Although a gap between the molecular films may be eliminated by a heat treatment at a high temperature, radio wave transmission can be maintained by partially leaving a region with low conductivity at the interface of the molecular films or the like.

The molecular film included in the molecular film assembly according to the present embodiment preferably includes the tungsten-oxygen octahedral blocks as described above, and has the basic skeleton being a repeating structure of the blocks. That is, it is preferable that the molecular film is crystalline. Whether the basic skeleton is the repeating structure of the tungsten-oxygen octahedral blocks can be determined by analyzing electron diffraction patterns measured using a transmission electron microscope or by analyzing XRD patterns measured using an X-ray diffractometer (XRD).

When the structural measurement of the molecular film or the molecular film assembly according to the present embodiment is performed by the X-ray diffractometer, because the molecular film or the molecular film assembly may have the shape of a sheet having a thickness of 1 nm or more and 10 nm or less, it is necessary to measure the XRD pattern by the thin film X-ray diffraction instead of the powder X-ray diffraction. In the thin film X-ray diffraction, because measurement is performed by fixing the incident angle of X-rays to a small angle of 0.5° or less near the critical angle of total reflection, the penetration depth of X-rays into the sample is several tens of nanometers, and the diffracted X-ray signal can be detected with high precision almost unaffected by the base material. The thin film X-ray diffraction includes a grazing incidence X-ray diffraction (GI-XRD), an in-plane X-ray diffraction, and the like, and among them, the in-plane X-ray diffraction is preferable. The in-plane X-ray diffraction is also called ϕ-2θχ scan, and the like. Because the goniometer scans horizontally within the plane of the sample, it is important to accurately adjust the inclination and tilt axis within the plane of the sample. Accordingly, the angle of the incident X-rays can be controlled to 0.2° or less, and it is possible to measure the crystalline state of ultra-thin films with a film thickness of several nanometers or less and the orientation state of the crystal plane in the direction perpendicular to the plane of the substrate. Examples of devices that can perform measurements by the in-plane X-ray diffraction include a fully automatic multi-purpose X-ray diffractometer SmartLab manufactured by Rigaku Corporation.

### (2) Composition

The molecular film according to the present embodiment includes the tungsten-oxygen octahedral blocks, and it is preferable to introduce oxygen defects from the viewpoint of enhancing the infrared-shielding performance. The molecular film according to the present embodiment preferably contains one or more oxides selected from the composite tungsten oxide and the tungsten oxide.

Hereinafter, the composite tungsten oxide and the tungsten oxide which can be suitably contained in the molecular film according to the present embodiment will be described.

### (Composite Tungsten Oxide)

Typically, it is known that materials containing free electrons exhibit a reflection absorption response to electromagnetic waves around the solar radiation region with a wavelength of 200 nm to 2,600 nm due to plasma vibration. It is known that when the powder of such materials is made into particles smaller than the wavelength of light, geometric scattering in the visible light region (wavelengths from 380 nm to 780 nm) is reduced and transparency in the visible light region can be obtained. In the present specification, "transparency" is used to mean "high transmission with little scattering for light in the visible light region".

Because there are no effective free electrons in tungsten oxide (WO₃), the absorption and reflection characteristics in the infrared region are small, and it is not effective as an infrared absorbing material or an infrared reflecting material.

In contrast, it is known that WO_{3-δ} with oxygen defects and a composite tungsten oxide with positive elements such as Na added to WO₃ are conductive materials and are materials with free electrons. Analysis of single crystals of these materials with free electrons suggests the response of free electrons to light in the infrared region.

By adding M, which is an element or atomic group (molecule) described later, to the WO₃ described above to form a composite tungsten oxide, free electrons are generated in the WO₃. Therefore, the composite tungsten oxide exhibits strong absorption and reflection characteristics due to free electrons, particularly in the near-infrared region, and is effective as a near-infrared absorbing material or a near-infrared reflecting material having a wavelength of about 1,000 nm. Further, by introducing oxygen defects, stronger absorption and reflection characteristics are exhibited.

That is, by performing with respect to the WO₃ both the control of the oxygen amount and the addition of M to generate free electrons, excellent infrared absorbing materials and infrared reflecting materials can be obtained. For this reason, the molecular film according to the present embodiment preferably contains the composite tungsten oxide. When the composite tungsten oxide in which both the control of the oxygen amount and the addition of M to generate free electrons are performed is described using a general formula of MₓW_{y}O_{z}, it is preferable that x, y, and z satisfy the relationships of 0.001≤x/y≤1 and 2.0≤z/y≤3.5. M in the general formula may be one or more components selected from the group of elements and a group of atomic groups. Examples of the group of elements include H, B, C, N, F, Li, Na, K, Rb, Cs, Fr, Ca, Sr, Ba, Ra, Sc, Y, La, Ce, Pr, Nd, Pm, Sm, Eu, Gd, Tb, Dy, Ho, Er, Tm, Yb, Lu, Be, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, P, S, Se, Cl, Br, I, Te, Ti, Nb, V, Mo, Ta, Re, Hf, Os, and Bi. Examples of the group of atomic groups include Bi₂O₂, OH, H₂O, and H₃O. In the above general formula, W represents tungsten and O represents oxygen. The molecular film according to the present embodiment may contain a composite tungsten oxide as described above, and in this case, the composite tungsten oxide contained in the molecular film preferably satisfies the above general formula.

First, the value of x/y indicating the added amount of M will be described.

When the value of x/y is 0.001 or more, a sufficient amount of free electrons is generated in the composite tungsten oxide, and the desired infrared absorption effect and infrared reflection effect can be obtained. As the added amount of M increases, the supplied amount of free electrons increases, and the infrared absorption efficiency and infrared reflection efficiency also increase, but this effect is saturated when the value of x/y is approximately 1. When the value of x/y is 1 or less, it is preferable because the formation of impurity phases can be minimized.

Next, the value of z/y, which indicates the control of the oxygen amount, will be described. In the case of the tungsten oxide represented by the general formula W_{y}O_{z}, by setting z/y smaller than 3, free electrons can be generated due to oxygen defects. Therefore, in the case of the tungsten oxide, by setting z/y smaller than 3, near-infrared absorbing ability and near-infrared reflection ability can be exhibited.

With respect to the above, in the case of the composite tungsten oxide represented by the general formula MₓW_{y}O_{z}, in addition to the mechanism as in the tungsten oxide represented by the general formula W_{y}O_{z}, free electrons are supplied by the added amount of M even when the value of z/y satisfies 3≤z/y≤3.5. In addition, because the surface of the molecular film may be negatively charged, a reflection absorption response due to the supply of free electrons may be exhibited even when z/y is 3.5. However, the crystalline phase of WO₂ may cause absorption and scattering of light in the visible light region, thereby reducing the absorption and reflection of light in the near-infrared region. Therefore, from the viewpoint of minimizing the generation of WO₂, z/y is preferably 2.0 or more. From the above, it is preferable that z/y satisfies 2.0≤z/y≤3.5, more preferably 2.2≤z/y≤3.3, and even more preferably 2.45≤z/y≤3.3.

Preferably, M is one or more types selected from the group of elements including H, B, C, N, F, Li, Na, K, Rb, Cs, Fr, Ca, Sr, Ba, Ra, Sc, Y, La, Ce, Pr, Nd, Pm, Sm, Eu, Gd, Tb, Dy, Ho, Er, Tm, Yb, Lu, Be, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, P, S, Se, Cl, Br, I, Te, Ti, Nb, V, Mo, Ta, Re, Hf, Os, and Bi, and a group of atomic groups including Bi₂O₂, OH, H₂O, and H₃O.

More preferably, from the viewpoint of stability in MₓW_{y}O_{z} to which M is added, M is one or more types selected from the group of elements including H, Li, Na, K, Rb, Cs, Fr, Ca, Sr, Ba, Ra, Sc, Y, La, Ce, Pr, Nd, Pm, Sm, Eu, Gd, Tb, Dy, Ho, Er, Tm, Yb, Lu, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, and Re, and a group of atomic groups including Bi₂O₂, H₂O, and H₃O.

Even more preferably, M contains one or more elements selected from H, Li, Na, K, Rb, Cs, Fr, Ca, Sr, Ba, Fe, Cu, Ag, In, Tl, Sn, Pb, and Yb.

From the viewpoint of improving optical characteristics and weatherability as an infrared absorbing material and an infrared reflecting material, it is preferable that M belongs to one of alkali metal elements, alkali earth metal elements, transition metal elements, group 4B elements, or group 5B elements.

The crystal structure of the composite tungsten oxide is not particularly limited and may have one or more structures selected from, for example, hexagonal, cubic, tetragonal, and the like. The composite tungsten oxide may be amorphous.

The composite tungsten oxide may have the atomic configuration illustrated in FIG. 1, for example, in the molecular film according to the present embodiment.

As described above, the hexagonal void 12 is formed by assembling six tungsten-oxygen octahedral blocks 11, and the M 13 contained in the composite tungsten oxide is placed in the void 12 to form one unit. A large number of this one unit may be assembled. Such unit structures may be arranged regularly or randomly in the molecular film according to the present embodiment. When the molecular film according to the present embodiment includes such a structure, transmission of light in the visible light region is particularly improved, and the reflection absorption response of light in the infrared region is particularly improved.

When M is added and present in the hexagonal void, transmission of light in the visible light region is particularly improved, and absorption and reflection of light in the infrared region are particularly improved. Typically, when M having a large ionic radius or molecular size (atomic group size) is added, the unit structure illustrated in FIG. 1 is likely to be formed. Specifically, when one or more types selected from the group of elements consisting of Cs, Rb, K, Tl, In, Ba, Li, Ca, Sr, Fe, and Sn is contained as M, the unit structure illustrated in FIG. 1 is likely to be formed. Therefore, the composite tungsten oxide preferably contains, as M, one or more elements selected from the group of elements consisting of Cs, Rb, K, Tl, In, Ba, Li, Ca, Sr, Fe, and Sn. M may be composed of one or more elements selected from the group of elements.

In a composite tungsten oxide containing one or more elements selected from Cs and Rb, among the elements having a large ionic radius, the unit structure illustrated in FIG. 1 is likely to be formed. Accordingly, particularly high performance can be exhibited in both the absorption and reflection of light in the infrared region and the transmission of light in the visible light region. Therefore, it is more preferable that one or more elements selected from Cs and Rb is contained as M. M may be composed of one or more elements selected from Cs and Rb.

Of course, even when M includes elements other than those mentioned above or atomic groups, it is sufficient that M is present in the hexagonal void formed by the WO₆ unit, and M is not limited to the elements described above.

When the composite tungsten oxide having the above structure has a uniform crystal structure, the added amount of M is, when expressed as a value of x/y, preferably 0.001≤x/y≤1, and more preferably 0.2≤x/y≤0.6.

### (Tungsten Oxide)

The molecular film according to the present embodiment may also include a tungsten oxide. The tungsten oxide is represented by the general formula W_{y}O_{z} (where W is tungsten, O is oxygen, and 2.0≤z/y<3.5). In the tungsten oxide represented by the general formula W_{y}O_{z}, the composition range of tungsten and oxygen is, as a composition ratio of oxygen to tungsten (z/y), preferably less than 3.5, more preferably 2.0≤z/y<3.5, and even more preferably 2.2≤z/y<3.5. In particular, it is even more preferably 2.45≤z/y≤3.499.

When the value of z/y is 2.0 or more, it is possible to avoid the appearance of a phase of WO₂, which is not intended, in the tungsten oxide and to enhance the chemical stability as a material, so that a particularly effective infrared absorbing material can be obtained. When the value of z/y is set to preferably less than 3.5, and more preferably 3.499 or less, a particularly sufficient amount of free electrons is generated due to the oxygen defects to enhance the absorption and reflection characteristics in the infrared region, and an efficient infrared absorbing material or infrared reflecting material can be obtained. Because the surface of the molecular film may be negatively charged, z/y may exceed 3. However, when z/y=3.5, there are no oxygen defects in the molecular film of the tungsten oxide, a sufficient amount of free electrons may not be generated, and the desired infrared absorption effect or infrared reflection effect may not be sufficiently obtained.

In addition, what is known as "Magnelli phase", which has the composition ratio of 2.45≤z/y≤3.499, is chemically stable and has excellent absorption and reflection characteristics in the near-infrared region, so that the tungsten oxide can be used more preferably as an infrared absorbing material. Therefore, the value of z/y is even more preferably 2.45≤z/y≤3.499 as described above. The above range of the value of z/y also takes into consideration the case where the surface of the molecular film is negatively charged as described above.

### (3) Characteristics of Molecular Film and Molecular Film Assembly

The molecular film according to the present embodiment may have chromic characteristics other than the infrared-shielding function. Tungsten oxides and composite tungsten oxides, like other hydrated tungsten oxides, are known as photochromic materials and as electrochromic materials. The molecular film according to the present embodiment is also a photochromic material and an electrochromic material. The molecular film according to the present embodiment exhibits a photochromic reaction in response to light such as high-energy ultraviolet light, visible light, and the like. When the threshold value of the energy required for the reaction is low, the photochromic reaction is exhibited also in response to infrared rays. In response to ultraviolet light, visible light, and the like, cationic species such as protons generated around the molecular film are adsorbed onto the molecular film, providing a light absorption and reflection region. For this reason, in photochromic materials, it is important to increase the surface area so that more cationic species can be adsorbed. It is also important to increase the crystallinity so that the light absorption region provided by the adsorption of cationic species can be increased. A source of protons in response to ultraviolet light, visible light, and the like, may be organic substances and the like. Specific examples of the source of protons include additives such as a bulky guest such as a quaternary ammonium ion used in the soft chemical treatment described later, resins used as a matrix of a structure, and the like.

As described above, by including the tungsten-oxygen octahedral blocks, the molecular film according to the present embodiment can have excellent infrared-shielding performance due to infrared reflection. Further, by introducing oxygen defects, a molecular film with even excellent infrared-shielding performance can be obtained. That is, the molecular film according to the present embodiment can be used as an infrared-shielding material.

Further, the molecular film assembly according to the present embodiment can include the molecular film described above. Therefore, the molecular film assembly according to the present embodiment can also be used as an infrared-shielding material.

### [Method of Producing Molecular Film]

Next, a method of producing the molecular film according to the present embodiment will be described. According to the method of producing the molecular film according to the present embodiment, the molecular film described above can be produced, and therefore, explanation of matters that have already been explained will be omitted.

In the method of producing the molecular film according to the present embodiment, for example, a composite tungsten oxide having a layered crystal structure may be used as a raw material. The raw material having a layered crystal structure may be peeled down to one layer, which is the basic minimum unit of the crystal structure, or to several layers, by the soft chemical treatment to obtain the molecular film. Further, by performing a reduction treatment, the molecular film having an excellent infrared-shielding function can be obtained.

The soft chemical treatment is a treatment that combines acid treatment and colloidal treatment. That is, when a composite tungsten oxide powder having a layered crystal structure and the like is brought into contact with an acidic aqueous solution such as hydrochloric acid, and the product is filtered, washed, and dried, part or all of the alkali metal ions or the like present between the layers before the acid treatment are exchanged with hydrogen ions, and a hydrogen-type substance is obtained. Next, when the obtained hydrogen-type substance is placed in an aqueous solution of amine or the like and stirred, it becomes a colloid. At this time, the layers constituting the layered crystal structure are peeled down to individual layers. The layers constituting the layered crystal structure specifically means, for example, layers having the basic skeleton being a repeating structure of the tungsten-oxygen octahedral blocks.

Therefore, the method of producing the molecular film according to the present embodiment may include an acid treatment step and a colloidal step, as follows.

In the acid treatment step, a raw material having a layered crystal structure is brought into contact with an acid aqueous solution, the product is washed and dried, and a hydrogen-type substance is obtained.

In the colloidal step, the hydrogen-type substance is mixed with a liquid containing a bulky guest, and a molecular film is obtained.

As the raw material having a layered crystal structure, a composite tungsten oxide may be used, for example. The raw material preferably contains one or more composite tungsten oxides selected from Rb₄W₁₁O₃₅, Cs₄W₁₁O₃₅, Cs_{6+A}W₁₁O₃₆ (0≤A≤0.31), Cs_{8+B}W₁₅O₄₈ (0≤B≤0.5), and (Bi₂O₂)W₂O₇. In the composite tungsten oxides, alkali metal ions of Rb and Cs and cations of Bi₂O₂ and the like are present between the layers.

In the soft chemical treatment, a composite tungsten oxide powder having a layered crystal structure is brought into contact with an acid aqueous solution, and a hydrogen-type substance is obtained, for example. Specifically, for example, the hydrogen-type substance of Rb₄₋ₐHₐW₁₁O₃₅ (0≤a≤4), Cs_{4-b}H_{b}W₁₁O₃₅ (0≤b≤4), Cs_{6+A-c}H_{c}W₁₁O₃₆ (0≤c≤6.31), Cs_{8+B-d}H_{d}W₁₅O₄₈ (0≤d≤8.5), and (Bi₂O₂)₁₋ₑH₂ₑW₂O₇ (0≤e≤1) are obtained. In these hydrogen-type substances, part or all of the alkali metal ions and cations present between the layers before the acid treatment are exchanged with hydrogen ions. The hydrogen-type substances are hydrated in aqueous solutions, and even after filtration, washing, and drying, the hydrogen-type substances retain hydrated when air-dried at room temperature. It is also possible to obtain a substance in which hydrogen H is replaced with oxonium.

The acid aqueous solution used for the acid treatment is not particularly limited as long as it does not dissolve the composite tungsten oxide, and may be hydrochloric acid, nitric acid, sulfuric acid, carbonic acid, and the like. Depending on the type and concentration of the acid, and number of treatments, the amount of ion exchange may be changed.

Then, by inserting a bulky guest between the layers of the hydrogen-type substance that is an acid-treated product, for example, the hydrogen-type substance is peeled down to one layer, which is the basic minimum unit of the crystal structure, and a sheet-shaped molecular film can be obtained. Specifically, for example, molecular films of Rb₄₋ₐW₁₁O₃₅^{a-} (0≤a≤4), Cs_{4-b}W₁₁O₃₅^{b-} (0≤b≤4), Cs_{6+A-c}W₁₁O₃₆^{c-} (0≤e≤6.31), Cs_{8+B-d}W₁₅O₄₈^{d-} (0≤d≤8.5), and (Bi₂O₂)₁₋ₑW₂O₇^{e-} (0≤e≤1) can be obtained. When the molecular films are strictly separated, each of the molecular films is negatively charged. However, it is considered that, because the bulky guest modifies the surface of the molecular film as a cation, the overall state including the bulky guest is close to neutral.

The bulky guest, typified by a quaternary ammonium ion, is used in contact with a hydrogen-type substance in a liquid such as water or an organic solvent. For example, a material for supplying the bulky guest, typified by a quaternary ammonium salt, is dissolved in an appropriate liquid, the hydrogen-type substance is added thereto, and the liquid is mixed and shaken. Accordingly, the hydrogen-type substance can be peeled down to one layer.

As the ion to be the bulky guest, one or more ions of quaternary ammonium ions selected from tetrabutylammonium ion, tetrapropylammonium ion, tetraethylammonium ion, tetramethylammonium ion, and the like may be preferably used, but tetrabutylammonium ion (hereinafter also referred to as "TBA⁺") may be particularly preferably used. As the material for supplying the bulky guest, the quaternary ammonium salt can be preferably used, and tetrabutylammonium hydroxide can be particularly preferably used.

For example, the case where Rb₄W₁₁O₃₅ is used as the composite tungsten oxide having a layered crystal structure as the raw material, is considered. As illustrated in FIG. 3A, Rb₄W₁₁O₃₅ has a layered crystal structure in which a layer 31 and a plane 32 are alternately laminated. In the layer 31, a six-membered ring structure of the repeating structure of the tungsten-oxygen octahedral blocks are arranged, and in the plane 32, only Rb is present. That is, it has a structure in which alkali metal Rb is present between the layers 31. The six-membered ring structure of the octahedral blocks is a hexagonal tungsten bronze structure, and a one-dimensional tunnel of Rb is present in the six-membered ring structure. When Rb₄W₁₁O₃₅ having this layered crystal structure is subjected to an acid treatment, part or all of Rb present on the plane 32 is extracted into an acid aqueous solution as ions, and hydrogen ions or oxonium ions are introduced into the voids. Accordingly, the hydrogen-type substance is obtained. At this time, depending on the acid treatment conditions, Rb present in the one-dimensional tunnel in the six-membered ring structure of the layer 31 may also be extracted during the acid treatment. The hydrogen-type substance is then added to a liquid containing the quaternary ammonium ion or the like, which function as the bulky guest, and the liquid is mixed and shaken. By performing this operation, the hydrogen-type substance can be peeled down to one layer while retaining the six-membered ring structure of the layer 31 and the one-dimensional tunnel of Rb, and the molecular film of the layer 31 is obtained. Because the quaternary ammonium, which functions as the bulky guest, acts as a surface modifier and a dispersant of the molecular film, the molecular film is obtained in a dispersed state in the liquid, that is, a dispersion liquid containing the molecular film is obtained. The dispersion liquid can be used as a first coating liquid in a first coating step in producing an infrared-shielding film, which will be described later, for example.

Depending on the acid treatment conditions such as type and concentration of the acid, and number of treatments, for example, the amount of a in the hydrogen-type substance represented by the general formula Rb₄₋ₐHₐW₁₁O₃₅ (0≤a≤4), that is, the amount of ion exchange, can be changed. For example, when all of the Rb present on the plane 32 is ion-exchanged, a=1, a hydrogen-type substance of Rb₃HW₁₁O₃₅ is obtained, and a molecular film of Rb₃W₁₁O₃₅⁻ is obtained. In addition, when all of the Rb present in the one-dimensional tunnel within the six-membered ring structure of the layer 31 is also ion-exchanged, a hydrogen-type substance of H₄W₁₁O₃₅ is obtained, and a molecular film of W₁₁O₃₅⁴⁻ is obtained. The surfaces of both the molecular films of Rb₃W₁₁O₃₅⁻ and W₁₁O₃₅⁴⁻ are negatively charged. Normally, the maximum valence of W is 6+, so the molecular films are in the -1 and -4 charge states, respectively. However, it is considered that, because the bulky guest modifies the surface of the molecular film as a cation when the molecular film is obtained, the overall state including the bulky guest is close to neutral.

Here, from the viewpoint of sufficiently progressing the reaction of peeling the hydrogen-type substance down to one layer after the acid treatment, it is preferable to perform ion exchange of a=1 (corresponding to the amount of Rb ions present on the plane 32, that is, the amount of Rb ions present between the layers 31) or more. Therefore, it is preferable to perform the acid treatment so that a is 1 or more in the above general formula, and it is preferable to perform the acid treatment using hydrochloric acid having a concentration of 6N or more, nitric acid, sulfuric acid, or carbonic acid at a solid-liquid ratio of (solid)/(aqueous solution)=1 g/100 cm⁻³ or less. However, these are the preferred acid treatment conditions when Rb₄W₁₁O₃₅ is used as the raw material, and the preferred conditions vary depending on the raw material used.

The added amount of the bulky guest is not particularly limited, but it is preferable to add the bulky guest so that the molar ratio of TBA⁺, which is an ion to be the bulky guest, to the amount of hydrogen ions of the hydrogen-type substance represented by Rb₄₋ₐHₐW₁₁O₃₅ (0≤a≤4) is within a range of 0.5 or more and 2 or less, for example. By setting the above molar ratio to 0.5 or more, the peeling between layers can be particularly sufficiently progressed. In addition, by setting the molar ratio to 2 or less, the crystal structure of the hydrogen-type substance and the molecular film can be prevented from collapsing. More preferably, when the molar ratio is approximately 1, the molecular film can be obtained with the highest yield.

The size of the obtained molecular film is not particularly limited, but the molecular film may have a thickness equivalent to that of a single layer of the layer 31, and for example, a thickness of 2 nm or more and 3 nm or less. The length (n) of the obtained molecular film in the longitudinal direction may be, for example, 20 nm or more and 1 mm or less. That is, the aspect ratio may be 7 or more and 500,000 or less, for example. The size can be controlled by adjusting the synthesis (firing) temperature of the composite tungsten oxide having a layered crystal structure as the raw material, or by using a single crystal of the composite tungsten oxide or tungsten oxide. In addition, the molecular film can be destroyed by agitation or ultrasonic irradiation of the dispersion liquid containing the obtained molecular film. For example, the length of the width (in the longitudinal direction) can be controlled to 1 um or more by applying loose agitation, and can be controlled to 1 um or less by applying a strong shear force such as ultrasonic irradiation. However, it is currently difficult to synthesize a large molecular film having a length longer than 1 mm.

Unreacted material generated in the above reaction can be removed by further centrifuging the dispersion liquid containing the molecular film to be obtained.

In the molecular film according to the present embodiment, oxygen defects can be introduced by a reduction treatment, and the infrared-shielding function can be enhanced. The method of the reduction treatment is not particularly limited, but examples include a wet method in which an appropriate reducing agent is added at the same time as the hydrogen-type substance is peeled, or an appropriate reducing agent is added after the dispersion liquid containing the molecular film is obtained; and a dry method in which a reducing gas is used for the heat treatment. Both the wet method and the dry method can also be used in combination. When the base material is used, it is desirable that after a large number of molecular films are spread side-by-side on the base material and the molecular film assembly described above is obtained, the reduction treatment is completed. It is also possible that an appropriate reducing agent is added when obtaining a structure described later and the structure is obtained, and the reduction treatment is completed.

### [Infrared-Shielding Film]

The infrared-shielding film according to the present embodiment may include a molecular film assembly, specifically, may include a molecular film assembly including the molecular film described above. Even when the infrared-shielding film is composed only of a single molecular film assembly, composed only of a single molecular film, composed only of a laminated structure described later, or the like, and is in a partially supported freestanding state without a base material, the infrared-shielding film can exhibit the infrared-shielding performance.

The infrared-shielding film according to the present embodiment may also include a base material and a molecular film assembly provided on the base material.

As an example of the case where the infrared-shielding film according to the present embodiment includes the base material, FIG. 8 illustrates a cross-sectional schematic diagram on the plane perpendicular to the base material. As illustrated in FIG. 8, an infrared-shielding film 80 according to the present embodiment may include, for example, a base material 81 and a molecular film assembly 82 provided on at least one surface 81A of the base material 81. The molecular film assembly 82 may include the molecular film and may have the shape of a film.

FIG. 8 illustrates an example in which the molecular film assembly 82 is provided only on the one surface 81A of the base material 81, but the molecular film assembly may also be provided on the other surface 81B of the base material 81. The molecular film assembly provided on the one surface 81A and the molecular film assembly provided on the other surface 81B may be different, and either of them may be made of a high refractive index material described later. The infrared-shielding film may have a laminated structure of the molecular film assembly 82 and a high refractive index material 83 as illustrated in FIG. 9. The laminated structure will be described in detail later.

As an infrared-shielding film 100 illustrated in FIG. 10, the infrared-shielding film may also include the molecular film assembly 82 and infrared-shielding material particles 101 other than the molecular film. In the infrared-shielding film 100, the molecular film assembly 82 and the infrared-shielding material particles 101 are combined to form one layer. The infrared-shielding film 100 including a composite layer of the molecular film assembly 82 and the infrared-shielding material particles 101 may also include the base material 81 as illustrated in FIG. 10, and may not include the base material 81.

Further, as in the infrared-shielding film 110 illustrated in FIG. 11, the infrared-shielding film may have a laminated structure of the molecular film assembly 82 including the infrared-shielding material particles 101 and the high refractive index material 83. Also in this case, the infrared-shielding film may include the base material or may not include the base material. In addition, the infrared-shielding film may also include a matrix, as illustrated in FIGS. 12 to 14. The matrix will be described in detail later.

Hereinafter, the infrared-shielding film according to the present embodiment will be described with respect to (1) Case Where Infrared-Shielding Film Includes Base Material and (2) Case Where Infrared-Shielding Film Has Laminated Structure.

### (1) Case Where Infrared-Shielding Film Includes Base Material

The base material 81 may be any base material that can support the molecular film assembly, and its material and shape are not particularly limited. Because the infrared-shielding film is often used for a window material, a film for plastic greenhouses, or the like, it is preferable that the infrared-shielding film has any one of the shape of a sheet, a board, or a film. For this reason, it is preferable that the base material 81 has any one of the shape of a sheet, a board, or a film as well.

The material of the base material 81 is not particularly limited, and can be selected depending on the wavelength range of light to be transmitted, absorbed, or reflected required for the infrared-shielding film, and the strength, thickness, and the like required for the infrared-shielding film.

As the base material 81, one or more materials selected from a single crystal material, a polycrystal material, a glass, a metal, an alloy, a ceramic, and a resin may be included. The base material 81 may be composed of any of the above materials. The base material 81 may be any of a single crystal material base material, a polycrystal material base material, a glass base material, a metal base material, an alloy base material, a ceramic base material, and a resin base material. The base material 81 may be coated on the surface as necessary.

When the base material 81 includes the single crystal material, the single crystal material is not particularly limited, but examples of the single crystal material include one or more materials selected from a silicon substrate, a silicon substrate with an oxide film, a silver substrate, an aluminum substrate, a gold substrate, a bismuth substrate, a cadmium substrate, a cobalt substrate, a chromium substrate, a copper substrate, a dysprosium substrate, an erbium substrate, an iron substrate, a germanium substrate, a gadolinium substrate, a hafnium substrate, a holmium substrate, an indium substrate, an iridium substrate, a lithium substrate, a magnesium substrate, a molybdenum substrate, a niobium substrate, a nickel substrate, a nickel-aluminum substrate, a lead substrate, a palladium substrate, a platinum substrate, a rhenium substrate, a rhodium substrate, a ruthenium substrate, an antimony substrate, a tin substrate, a tantalum substrate, a terbium substrate, a tellurium substrate, a titanium substrate, a vanadium substrate, a tungsten substrate, an yttrium substrate, a zinc substrate, a zirconium substrate, an alloy crystal substrate, a silicon carbide substrate, a gallium nitride substrate, a gallium phosphide substrate, an indium phosphide substrate, a lithium fluoride substrate, a lanthanum fluoride substrate, a magnesium fluoride substrate, a strontium fluoride substrate, a potassium bromide substrate, a potassium chloride substrate, a sodium chloride substrate, a mica substrate, an aluminum oxide substrate, a titanium oxide substrate, a cobalt oxide substrate, a chromium oxide substrate, a manganese oxide substrate, a nickel oxide substrate, a tin oxide substrate, a zinc oxide substrate, a copper oxide substrate, an iron oxide substrate, a strontium titanate substrate, a lithium niobate substrate, a lithium tantalate substrate, a potassium tantalate substrate, a yttrium aluminate substrate, a lanthanum aluminate substrate, a lanthanum strontium aluminate substrate, a lanthanum strontium gallate substrate, a disprosium scandiate substrate, a gadolinium scandiate substrate, a neodymium scandiate substrate, a gadolinium gallium garnet substrate, and a yttrium aluminum garnet substrate.

When the base material 81 includes the polycrystal material, a substrate made of the same material as the single crystal material described above can be suitably used, except that the constituent material is polycrystalline.

When the base material 81 includes the glass, the glass material is not particularly limited, but the glass material is preferably one or more glasses selected from various functional glasses such as fused quartz glass, synthetic quartz glass, soda lime glass, borosilicate glass, crystal glass, alkali-free glass, lead glass, uranium glass, tempered glass, heat-resistant glass, heat-absorbing glass, Low-E glass, or the like.

When the base material 81 includes the metal, the specific material is not particularly limited, but the metal is preferably one or more metals selected from, for example, silver, aluminum, gold, bismuth, cadmium, cobalt, chromium, copper, dysprosium, erbium, iron, gallium, germanium, gadolinium, hafnium, holmium, indium, iridium, lithium, magnesium, molybdenum, niobium, nickel, lead, palladium, platinum, rhenium, rhodium, ruthenium, antimony, scandium, tin, tantalum, terbium, titanium, vanadium, tungsten, yttrium, zinc, zirconium, and SUS (stainless steel).

When the base material 81 includes the alloy, the material is not particularly limited, but the alloy is preferably one or more alloys selected from, for example, aluminum alloy, gold alloy, cobalt alloy, chromium alloy, copper alloy, iron-based alloy, germanium alloy, magnesium alloy, manganese alloy, nickel alloy, palladium alloy, platinum alloy, titanium alloy, tungsten alloy, and zirconium alloy.

When the base material 81 includes the ceramic, the specific material is not particularly limited, but the ceramic is preferably one or more ceramics selected from, for example, boride, carbide, and nitride, in addition to oxide. The ceramic has some overlap with the single crystal material, the polycrystal material, and the glass.

When the base material 81 includes the resin, the resin to be used is not particularly limited, but it is preferable that the resin does not cause problems in the surface condition or durability of the base material including the resin. Examples of the resin include a polyester polymer such as polyethylene terephthalate, polybutylene terephthalate, polyethylene naphthalate, polyethylene-2,6-naphthalate, and the like; a cellulose polymer such as diacetylcellulose, triacetylcellulose, and the like; a carbonate polymer such as polycarbonate and the like; an acrylic polymer such as polymethyl methacrylate and the like; a styrene polymer such as polystyrene, acrylonitrile-styrene copolymer, and the like; an olefinic polymer such as polyethylene, polypropylene, a polyolefin having a cyclic or norbornene structure, an ethylene-propylene copolymer, and the like; an amide polymer such as a vinyl chloride polymer, an aromatic polyamide, and the like; an ether polymer such as polyethersulfone, polyether ether ketone, and the like; an imide polymer; a sulfone polymer; a phenylene sulfide polymer; a vinylidene chloride polymer; an oxymethylene polymer; an epoxy polymer; a vinyl alcohol polymer; a polyvinyl acetal such as polyvinyl butyral and the like; and any resin selected from various binary or ternary copolymers, graft copolymers, blends, and the like of two or more resins selected from the resin group. When the base material 81 includes the resin, the resin is preferably one or more resins selected from polyethylene terephthalate, polybutylene terephthalate, polyethylene-2,6-naphthalate, polycarbonate, polymethyl methacrylate, and polyvinyl butyral. In particular, in terms of mechanical characteristics, optical characteristics, heat resistance, and cost efficiency, the base material 81 is more preferably a polyester biaxially oriented film using polyethylene terephthalate described above and the like. The polyester biaxially oriented film may be a copolyester film.

The thickness of the base material 81 is not particularly limited but may be selected depending on the strength, optical properties, and the like required for the infrared-shielding film. For example, the thickness is preferably 0.001 mm or more and 100 mm or less, and more preferably 0.01 mm or more and 30 mm or less.

### (2) Case Where Infrared-Shielding Film Has Laminated Structure

The infrared-shielding film may have a laminated structure. From the viewpoint of exhibiting excellent infrared-shielding performance due to infrared reflection, the infrared-shielding film preferably has a laminated structure of a layer including a molecular film assembly and a layer including a high refractive index material.

That is, the infrared-shielding film 80 illustrated in FIG. 8 may have a laminated structure instead of a region 801 in which the molecular film assembly 82 is provided. Specifically, for example, as in an infrared-shielding film 90 illustrated in FIG. 9, a laminated structure 91 may be provided on at least one surface 81A of the base material 81. The laminated structure 91 may also include the high refractive index material 83 as part of the laminated structure 91 in addition to the molecular film assembly 82 described above. FIG. 9 is a cross-sectional schematic diagram of the infrared-shielding film 90 according to the present embodiment in a plane along the laminating direction. Even in the case where the infrared-shielding film has the laminated structure, the infrared-shielding film may include the base material as illustrated in FIG. 9, or may not include the base material, that is, the infrared-shielding film may be composed only of the laminated structure 91.

In FIG. 9, an example is illustrated in which the infrared-shielding film 90 having the laminated structure includes two alternating layers, one layer including the molecular film assembly 82 and the other layer including the high refractive index material 83, but it is not limited to the configuration. The infrared-shielding film 90 having the laminated structure may include one layer including the molecular film assembly 82 and one layer including the high refractive index material 83. The infrared-shielding film 90 having the laminated structure may include three or more layers of each. In addition, two or more types of the molecular film assemblies or two or more types of the high refractive index materials may be included in the same layer or in separate layers. A layer in which the molecular film assembly 82 and a layer including a material other than the high refractive index material 83 may also be included. As in the infrared-shielding film 110 illustrated in FIG. 11, an infrared-shielding material and the like may be included such as infrared-shielding material particles 101 that are different from the molecular film assembly 82 and the high refractive index material 83.

In FIG. 9, an example is illustrated in which the laminated structure 91 including the molecular film assembly 82 is provided only on the one surface 81A of the base material 81, but it is not limited to the configuration. For example, the laminated structure 91 may be further provided on the other surface 81B side of the base material 81. On the other surface 81B side of the base material 81, a layer composed of the molecular film assembly 82 that does not have the laminated structure or a layer composed of the high refractive index material 83 that does not have the laminated structure, may be provided.

When the infrared-shielding film having the laminated structure includes the layer including the high refractive index material, light of a specific wavelength according to the difference in refractive index is reflected at the interface of each layer, and by controlling the film thickness of each layer, it is possible to specifically shield light in the infrared region.

It is sufficient that the layer including the high refractive index material includes the high refractive index material as described above. The layer including the high refractive index material may include a dispersion medium in which the high refractive index material was dispersed when the layer including the high refractive index material was formed, a binder, or the like. The layer including the high refractive index material may be composed of only the high refractive index material, but even in this case, it does not exclude the case where the layer including the high refractive index material includes unavoidable impurities.

The high refractive index material is not particularly limited, but for example, it is preferable to use a material having a refractive index of two or more.

As the high refractive index material, one or more materials selected from, for example, titanium oxide, manganese oxide, tantalum oxide, niobium oxide, titanate, tantalate, niobate, and boron nitride may be suitably used. Because these materials have high visible light transparency, they do not reduce the infrared-shielding performance. In addition, because these materials can be obtained in the form of a film having a thickness of approximately 1 nm by the soft chemical treatment similar to the molecular film according to the present embodiment, the process similar to that of the molecular film according to the present embodiment can be adopted, which is advantageous in terms of cost. Further, by laminating the molecular films, the film thickness of each layer can be readily controlled in 1 nm increments, and light of any wavelength can be specifically shielded.

### (3) Characteristics of Infrared-Shielding Film

The optical characteristics of the infrared-shielding film according to the present embodiment are not particularly limited, but for example, it is preferable that the maximum value of the transmittance of light in the wavelength range of 400 nm or more and 780 nm or less is 50% or more, and that the maximum value of the reflectance of light in the wavelength range of 780 nm or more and 2,600 nm or less is 50% or more.

By setting the maximum value of the transmittance of light in the wavelength range of 400 nm or more and 780 nm or less, which is the visible light region, to 50% or more, visible light can be sufficiently transmitted. In addition, by setting the maximum value of the reflectance of light in the wavelength range of 780 nm or more and 2,600 nm or less, which is the infrared region, to 50% or more, light in the infrared region can be sufficiently shielded. Therefore, the infrared-shielding film according to the present embodiment having the above characteristics has excellent infrared-shielding performance.

### [Method of Producing Infrared-Shielding Film]

Next, a method of producing the infrared-shielding film according to the present embodiment will be described. According to the method of producing the infrared-shielding film according to the present embodiment, the infrared-shielding film described above can be produced. Therefore, explanation of matters that have already been explained will be omitted.

The method of producing the infrared-shielding film according to the present embodiment may include a first coating step and a heat treatment step, as follows.

In the first coating step, a dispersion liquid containing the molecular film may be applied on the surface of the base material.

In the heat treatment step, the base material after the first coating step may be heat treated in an atmosphere containing one or more gases selected from inert gas and reducing gas, or in a vacuum.

According to the method of producing the infrared-shielding film according to the present embodiment, the infrared-shielding film including the molecular film assembly including the molecular film of the tungsten-oxygen octahedral blocks can be produced. The molecular film may also include the composite tungsten oxide represented by the general formula MₓW_{y}O_{z} or the tungsten oxide represented by the general formula W_{y}O_{z}, as described above. The molecular film may also have oxygen defects, as described above.

Each step will be described below.

### (1) First Coating step

In the first coating step, as described above, a dispersion liquid containing the molecular film is applied on at least one surface of the base material to obtain a molecular film assembly. Here, the dispersion liquid containing the molecular film is referred to as a first coating liquid.

A surfactant may be added to the dispersion liquid containing the molecular film obtained as described above in the method of producing the molecular film, to obtain the first coating liquid, for example, for the purpose of coating particularly uniformly on the base material at the time of the coating. As the surfactant, various types of surfactants may be used depending on the purpose of the surfactant, such as nonionic, anionic, cationic, amphoteric, and the like, and depending on the material of the base material.

The first coating liquid may also be diluted depending on the coating method and the like, before coating on the base material.

The coating method of the first coating liquid on the surface of the base material is not particularly limited, but the first coating liquid is preferably applied uniformly so that the surface of the base material and the main surface of the molecular film are parallel. For example, the first coating liquid may be applied on the surface of the base material by a wet method such as a bar coating method, a dip coating method, an electrophoresis method, a spray coating method, a spin coating method, a Langmuir-Blodgett method (LB method), a layer-by-layer method, a single droplet assembly described in the non-patent document 1, and the like. Because the molecular film contained in the dispersion liquid has a large aspect ratio, the surface of the base material and the main surface of the molecular film tend to be parallel to each other regardless of the coating method, making it easy to coat uniformly. In addition, from the viewpoint of coating only a single layer of the molecular film over a wide area while assembling the molecular film, it is more preferable to adopt one or more methods selected from the spin coating method, the Langmuir-Blodgett method, the layer-by-layer method, and the single droplet assembly. Among them, the single droplet assembly is particularly preferable because it is easily used and minimizes the consumption of the molecular film.

After the first coating liquid is applied on the surface of the base material, if necessary, drying or a heat treatment at a lower temperature than the heat treatment temperature in the heat treatment step described later may be performed.

### (2) Heat Treatment Step

As described above, in the heat treatment step, after the first coating step is completed, the heat treatment may be performed in an atmosphere containing one or more gases selected from inert gas and reducing gas, or in a vacuum.

The reducing gas is not particularly limited, but H₂ (hydrogen) is preferable. When H₂ is used as the reducing gas, as for the composition of the reducing atmosphere, it is preferable to mix H₂ in a volume ratio of more than 0% and 5.0% or less with an inert gas such as Ar or N₂, for example. The inert gas is not particularly limited, but one or more gases selected from Ar or N₂ described above are preferable from the viewpoint of cost.

The heat treatment temperature is also not particularly limited, but the heat treatment temperature is, for example, 400°C or more and 900°C or less, and more preferably 500°C or more and 800°C or less. The molecular film can exhibit high infrared-shielding performance by introducing oxygen defects into the tungsten-oxygen octahedral blocks by performing the heat treatment at 400°C or more. By performing the heat treatment at 900°C or less, generation of by-products, reaction between the molecular film and the base material, and sublimation of the molecular film, and the like can be reduced.

### (3) Second Coating step

As described above, the infrared-shielding film according to the present embodiment may have the laminated structure including the high refractive index material. Therefore, the method of producing the infrared-shielding film according to the present embodiment may further include a second coating step in which a second coating liquid containing the high refractive index material is applied on the coating film of the first coating liquid after the first coating step and before or after the heat treatment step, as necessary.

The first coating step and the second coating step described above may be repeatedly performed according to the number of layers to be laminated. The heat treatment step described above may be optionally performed before and after the coating step or between the first coating step and the second coating step.

The second coating liquid may include the high refractive index material as described above. As described above, the high refractive index material is not particularly limited, but for example, it is preferable to use a material having a refractive index of two or more.

Also in the second coating liquid, the high refractive index material preferably has the shape of a sheet, and more preferably the high refractive index material is the molecular film. Therefore, the high refractive index material is preferably obtained by peeling from a material having a layered crystal structure, and one or more materials selected from, for example, titanium oxide, manganese oxide, tantalum oxide, niobium oxide, titanate, tantalate, niobate, and boron nitride may be suitably used.

In particular, the high refractive index material is preferably titanium oxide, and the titanium oxide is more preferably, for example, Ti_{1-α}O₂ (0.09≤α0.13).

In the case of preparing the second coating liquid, as in the case of the first coating liquid, for example, first, a composite titanium oxide having a layered crystal structure may be converted into a hydrogen-type substance or the like by acid treatment with an acidic aqueous solution such as hydrochloric acid.

Then, for example, by inserting a bulky guest between the layers, for example, the hydrogen-type substance is peeled down to one layer while maintaining the crystal structure of the high refractive index material, and a sheet-shaped molecular film can be obtained. Specifically, a material functioning as the bulky guest may be mixed into the acid-treated product. Examples of the material functioning as the bulky guest includes the quaternary ammonium ion and the like.

Therefore, a preparation step of the second coating liquid may include an acid treatment step and a colloidal step, as follows.

In the acid treatment step, a raw material having a layered crystal structure is brought into contact with an acid aqueous solution, the product is washed and dried, and a hydrogen-type substance is obtained.

In the colloidal step, the hydrogen-type substance is mixed with a liquid containing a bulky guest, and a molecular film of a high refractive index material is obtained.

The dispersion liquid obtained after the colloidal step may be used as a second coating liquid.

The case where the high refractive index material is titanium oxide will be described as an example, but the mechanism is the same as the case of the composite tungsten oxide exemplified by the method of producing the molecular film. As a raw material of the titanium oxide, for example, a composite titanium oxide having a layered crystal structure such as lithium potassium titanate is used. When the raw material of the titanium oxide is subjected to the acid treatment, lithium ions and potassium ions between the layers are exchanged with hydrogen ions and oxonium ions. By adding the quaternary ammonium ions and the like, which function as the bulky guest, a titanium oxide molecular film that has been peeled down to one layer is obtained in a state dispersed in a liquid. That is, a dispersion liquid containing the titanium oxide molecular film is obtained. The raw material of the high refractive index material is not limited to the configuration described above. When the material has a layered crystal structure, a dispersion liquid containing a molecular film can be obtained by the similar mechanism.

As the ion to be the bulky guest, one or more ions selected from tetrabutylammonium ion, tetrapropylammonium ion, tetraethylammonium ion, tetramethylammonium ion, and the like may be used. As the ion to be the bulky guest, tetrabutylammonium ion (TBA⁺) may be particularly preferably used.

By the acid treatment of the raw material of the high refractive index material to be titanium oxide, a hydrogen-type substance represented by the general formula H_{β}Ti_{1-α}O₂·H₂O (0≤β≤1, 0.09≤0α≤0.13) is obtained. It is preferable to add TBA⁺, which is the ion to be the bulky guest, so that the molar ratio of TBA⁺ to the amount of hydrogen ions in the hydrogen-type substance is 0.5 or more and 2 or less.

The size of the obtained molecular film is not particularly limited, but the molecular film may have a thickness equivalent to that of a single layer of a layered compound, and for example, a thickness of 1 nm or more and 2 nm or less. The length of the obtained molecular film in the longitudinal direction may be, for example, 20 nm or more and 1 mm or less. That is, the aspect ratio may be 10 or more and 1,000,000 or less, for example. The length of the molecular film can be adjusted by the synthesis conditions of the composite titanium oxide having a layered crystal structure as the raw material, stirring of the dispersion liquid containing the molecular film, ultrasonic irradiation, and the like.

A surfactant may be added to the second coating liquid obtained as described above, for example, for the purpose of coating particularly uniformly on the base material at the time of the coating. As the surfactant, various types of surfactants may be used depending on the purpose of the surfactant, such as nonionic, anionic, cationic, amphoteric, and the like, and depending on the material of the base material.

The coating method of the second coating liquid on the surface of the base material is the same as that of the first coating liquid, and the description thereof is omitted.

Further, after the coating of the second coating liquid, if necessary, drying or a heat treatment at a lower temperature than the heat treatment temperature in the heat treatment step may be performed.

The order of the first coating step and the second coating step may be changed so that the second coating liquid containing the high refractive index material may be applied directly onto the base material.

### (4) Separation step

The method of producing the infrared-shielding film according to the present embodiment may further include an optional step, and for example, a separation step of separating the infrared-shielding film from the base material may be included. Depending on the material of the base material, the infrared-shielding film may be separated from the base material by, for example, dissolving only the base material, peeling the infrared-shielding film from the base material, or the like. The separated infrared-shielding film may be placed on another base material or provided in a structure described below.

### [Structure]

Next, the structure according to the present embodiment will be described.

The structure according to the present embodiment may include the molecular film described above. In the structure according to the present embodiment, the molecular film may have the form of the molecular film assembly or the infrared-shielding film. Therefore, the structure according to the present embodiment may include one or more components selected from the molecular film, the molecular film assembly, and the infrared-shielding film.

The structure according to the present embodiment may include, for example, a matrix such as a solid medium and the molecular film described above provided in the matrix. Also in this case, the molecular film in the matrix may have the form of the molecular film assembly or the infrared-shielding film. Therefore, the structure according to the present embodiment may include the matrix and one or more components selected from the molecular film, the molecular film assembly, and the infrared-shielding film provided in the matrix.

As described above, the structure according to the present embodiment may include a matrix of a suitable solid medium such as a resin, and the molecular film described above, which is a filler, provided by kneading or the like in the matrix. The matrix typically refers to a base material, but here the matrix refers to a solid medium into which the filler, such as the molecular film, is kneaded.

The structure according to the present embodiment may include, for example like a structure 120 illustrated in FIG. 12, a matrix 122 and an infrared shield 121 provided within the matrix 122. The infrared shield 121 may be, for example, the single molecular film described above. The infrared shield 121 may be the molecular film assembly 82 as illustrated in FIG. 12, or an infrared-shielding film as described later.

The structure according to the present embodiment may include, for example like a structure 130 illustrated in FIG. 13, the matrix 122 and the infrared shield 121 provided within the matrix 122. The structure 130 illustrated in FIG. 13 is an example in which the infrared-shielding film including a laminated structure of the molecular film assembly 82 and the high refractive index material 83 is provided on the base material 81 as the infrared shield 121. When the infrared-shielding film is used as the infrared shield 121, instead of the structure illustrated in FIG. 13, various infrared-shielding films described with reference to FIGS. 8, 10, and 11 may also be used as the infrared shield.

As described above, in the infrared shield 121 included in the structure according to the present embodiment, the infrared-shielding film such as the molecular film assembly provided on the base material may also be kneaded into the matrix together with the base material. That is, the structure may include the base material in the matrix. More specifically, the structure may include the infrared-shielding film including the base material and the molecular film assembly provided on the base material.

The structure according to the present embodiment may also include, like a structure 140 illustrated in FIG. 14, the base material. That is, the structure 140 may include a base material 141 and the matrix 122 including the infrared shield 121 such as the molecular film described above, provided on the base material 141.

The configuration of the infrared shield 121 is not particularly limited, but as in the case of a structure 150 illustrated in FIG. 15, the infrared shield 121 may be the infrared-shielding film including the base material 81 and the molecular film assembly 82 on the base material 81. When the infrared-shielding film is used as the infrared shield 121, instead of the infrared-shielding film of the structure illustrated in FIG. 15, various infrared-shielding films described with reference to FIGS. 9 to 11 may also be used as the infrared shield.

The structure according to the present embodiment may further include, like a structure 160 illustrated in FIG. 16, infrared-shielding material particles 161. The infrared-shielding material particles 161 may be provided, for example, in the matrix 122. The infrared-shielding material particles 161 are components other than the molecular film, the molecular film assembly, and the infrared-shielding film.

Also in the structure 160, the matrix 122 containing the infrared-shielding material particles 161 and the infrared shield 121 may be provided on the base material 141. The structure 160 may not include the base material 141.

Because the structures illustrated in FIGS. 14 to 16 are formed on the base material, the structures may be classified as the infrared-shielding film rather than the structure.

The matrix may be any matrix in which the molecular film, the molecular film assembly, or the infrared-shielding film can be kneaded, and its material and shape are not particularly limited. Because the structure in which the molecular film or the like is provided in a solid medium is often used for a window material, a film for plastic greenhouses, or the like, it is preferable that the matrix has any one of the shape of a sheet, a board, or a film. For this reason, it is preferable that the matrix has any one of the shape of a sheet, a board, or a film as well.

The material of the matrix is not particularly limited, but may be selected depending on the wavelength range of light to be transmitted, absorbed, or reflected required for the window material, and the strength, thickness, and the like required for the window material.

The matrix may include a material similar to the base material described above with respect to the infrared-shielding film. It is preferable that the matrix includes a resin, from the viewpoint of light weight, economical, and durable requirements for a window material, in addition to ease and processability when kneading the molecular film and the like. Because resins have a low softening point, by melt mixing and stretching processing, and the like, it is easy to obtain the matrix having the shape of a sheet, a board, or a film in which the molecular film or the like as the filler is kneaded.

The resin to be used is not particularly limited, but it is preferably one that does not cause problems in the surface condition or durability of the matrix containing the resin. For example, the resin may be suitably selected from the materials when the base material 81 includes the resin, as described in "(1) Case Where Infrared-Shielding Film Includes Base Material" with respect to the infrared-shielding film described above. In particular, the resin is more preferably one or more resins selected from polyethylene terephthalate, polybutylene terephthalate, polyethylene-2,6-naphthalate, polycarbonate, polymethyl methacrylate, and polyvinyl butyral, in terms of mechanical characteristics, optical characteristics, heat resistance, and cost efficiency. The polyester resin may be a copolyester resin.

### Examples

Hereinafter, the present invention will be specifically described with reference to examples. However, the present invention is not limited to the following examples.

### [Example 1]

### (Preparation of First Coating Liquid)

First, the first coating liquid was prepared by the following procedure.

16.1 g of cesium carbonate and 40.0 g of tungsten (VI) oxide were mixed so that the molar ratio of Cs:W was 6.3:11, and firing was performed at 900°C for 5 hours in an air atmosphere. It was confirmed that Cs₆W₁₁O₃₆ was obtained from the powder X-ray diffraction pattern of the fired product. At the same time, it was also confirmed that the obtained Cs₆W₁₁O₃₆ had the basic skeleton being a repeating structure of tungsten-oxygen octahedral blocks. The powder X-ray diffraction pattern was measured by the powder X-ray diffraction (θ-2θ method) using an X-ray diffractometer (SmartLab, a fully automatic multi-purpose X-ray diffractometer manufactured by Rigaku Corporation).

0.5 g of the obtained Cs₆W₁₁O₃₆ was taken and immersed in 50 ml of 6N hydrochloric acid. Then, the acid treatment was performed by mixing and shaking with a shaker (Lab Shaker SR-1 manufactured by AS ONE Corporation) at a shaking speed of 150 rpm for 1 day at room temperature, that is, without heat treatment such as heating or cooling. After removing the hydrochloric acid by decantation, the hydrochloric acid was replaced with new hydrochloric acid, and the same acid treatment was performed for an additional 1 day. By filtration, washing with water, and air-drying, a solid residue of the hydrogen-type substance, which was the acid treated product, was recovered (acid treatment step).

When the Cs and W concentrations of the obtained solid residue were analyzed by an ICP optical emission spectrometer (manufactured by Shimadzu Corporation, model ICPE-9000), they were 17wt% and 64wt%, respectively. The chemical formula was calculated from the results, and it was confirmed that the solid residue had a molar ratio of Cs/W = 4/11. In Table 1, among the columns of the hydrogen-type substances, the obtained mass percentages of each element of the hydrogen-type substances are presented in the columns for each element of Cs, Rb, and W, and the molar ratios of Cs or Rb and W are presented in the columns of Cs/W and Rb/W, respectively.

To 0.4 g of the obtained solid residue, 100 cm³ of 0.0029 mol/l tetrabutylammonium hydroxide aqueous solution was added. After mixing and shaking with a shaker at a shaking speed of 150 rpm for 14 days, the sedimentation component was removed by centrifugation, and a dispersion liquid containing a molecular film of Cs₄W₁₁O₃₆²⁻, which was the first coating liquid according to Example 1, was obtained (colloidal step). Here, the molecular film is obtained in a negatively charged state, but the surface of the molecular film is modified by TBA⁺ of tetrabutylammonium ion, and it is considered that the overall state is close to neutral.

The obtained dispersion liquid containing the molecular film of Cs₄W₁₁O₃₆²⁻ was dropped on a microgrid for transmission electron microscopy, and the molecular film was transferred to observe the morphology using a transmission electron microscope. It was confirmed that the average length of the molecular film in the longitudinal direction was 5 um for ten molecular films subjected to the morphological observation. When the crystal structure was analyzed from the electron diffraction pattern of the molecular film, it was confirmed that the obtained molecular film was a molecular film having the basic skeleton being a repeating structure of tungsten-oxygen octahedral blocks, similar to Cs₆W₁₁O₃₆ before the acid treatment.

### (Preparation of Second Coating Liquid)

Potassium carbonate, lithium carbonate, titanium oxide, and molybdenum trioxide were mixed in a molar ratio of 1.67:0.13:1.73:1.27, fired at 1,200°C for 10 hours, and then slowly cooled to 950°C at a rate of 4°C per hour. Potassium molybdate, a flux component, was removed in pure water, and air-dried to obtain single crystals of lithium potassium titanate, a precursor of the high refractive index material.

Then, 30 g of the single crystals were subjected to acid treatment in 2 dm³ of 0.5 N hydrochloric acid solution at room temperature, and layered titanate crystals (H_{0.54}Ti_{0.87}O₂·1·0H₂O) with a size of 100 um to 1 mm were obtained (acid treatment step).

Then, 100 cm³ of tetrabutylammonium hydroxide aqueous solution was added to 0.4 g of the layered titanate crystals, and the crystals were reacted in a static state at room temperature for 2 weeks, and the precipitated components were removed by centrifugation (colloidal step). As a result, a milky white sol solution represented by the general formula Ti_{0.87}O₂^{0.52-}, in which a rectangular molecular film having a length of about 70 um and a width of about 20 um was dispersed, was prepared. The morphology of the molecular film in the second coating liquid was observed by the transmission electron microscope. Here, the molecular film was obtained in a negatively charged state, but the surface of the molecular film is modified by TBA⁺ of tetrabutylammonium ion, and it is considered that the overall state is close to neutral.

The obtained sol solution was diluted 50 times to prepare a dispersion liquid containing a molecular film of titanium oxide (Ti_{0.87}O₂^{0.52-}) as the second coating liquid adjusted to pH9. The above dilution was performed by adding a diluent to the sol solution to adjust the pH to 9. As the diluent, 2wt% of polydiallyldimethylammonium chloride, that is, a solution in which NaCl in an amount equivalent to 0.5 moldm⁻³ was added to 100cm³ of polydiallyldimethylammonium chloride solution (PDDA solution), was used.

The obtained dispersion liquid containing the molecular film of Cs₄W₁₁O₃₆²⁻, which was the first coating liquid, was diluted 50 times, applied on a 1 mm thick quartz substrate by a spin coater (ACT-300A II, manufactured by Active, Ltd.), air-dried, and heat-treated at 200°C for 3 minutes in air. This procedure was repeated 5 times (first coating step).

The X-ray diffraction pattern of the molecular film assembly, which is a coating film of the molecular film formed on the quartz substrate, was measured by the X-ray diffractometer using an in-plane X-ray diffraction. When the X-ray diffraction pattern was analyzed, it was confirmed that the molecular film assembly included the molecular film having the basic skeleton being a repeating structure of tungsten-oxygen octahedral blocks. Because all the diffraction peaks were derived from the molecular film, it was confirmed that the obtained coating film included the molecular film as a main component of the crystalline material.

Then, the obtained dispersion liquid containing the molecular film of Ti_{0.87}O₂^{0.52-}, which was the second coating liquid, was applied, air-dried, and heat treated at 200°C for 3 minutes in air in the same manner. This operation was repeated 5 times (second coating step).

A series of coating operations including the first coating step and the second coating step were alternately repeated for an additional one time, and finally the first coating step was performed for an additional one time. A precursor of an infrared-shielding film was prepared in which three layers made of Cs₄W₁₁O₃₆²⁻ and two layers of the high refractive index material made of Ti_{0.87}O₂^{0.52-} were laminated.

A reduction heat treatment was carried out at 500°C for 10 min by heating while supplying a gas containing 4% H₂ gas by volume using Ar gas as a carrier. As a result, an infrared-shielding film according to Example 1 was obtained on one surface of the base material, having a laminated structure of a layer including a molecular film assembly composed of Cs₄W₁₁O_{z} (z<36) and a layer including a high refractive index material composed of titanium oxide. (heat treatment step)

The X-ray diffraction pattern of the infrared-shielding film according to Example 1 was measured by a grazing incidence X-ray diffraction using an X-ray diffractometer. When the X-ray diffraction pattern was analyzed, it was confirmed that the infrared-shielding film according to Example 1 contained a molecular film assembly including a molecular film having the basic skeleton being a repeating structure of tungsten-oxygen octahedral blocks and a high refractive index material.

The infrared-shielding film according to Example 1 was analyzed by X-ray photoelectron spectroscopy (XPS-Versa Probe II manufactured by ULVAC-PHI, Inc.). The photoelectrons excited by irradiation with 25 W of Al-Kα X-rays were measured, and by the peak fitting method, the W4f spectrum observed around 30 to 45eV was separated into five peaks: W4f_{7/2}⁶⁺, W4f_{5/2}⁶⁺, W4f_{7/2}⁵⁺, W4f_{5/2}⁵⁺, and W5p_{3/2}. When the ratio of W valence of 6+ and 5+ was determined from the intensity area of each peak, W⁶⁺ was 95.03% and W⁵⁺ was 4.97%. The z of Cs₄W₁₁O_{z} was 35.7. That is, the composition of the molecular film constituting the molecular film assembly in the infrared-shielding film according to Example 1 was confirmed to be Cs₄W₁₁O_{35.7}.

A calculation method of z will now be described. Although the charging state of Cs₄W₁₁O_{z} is not certain, it is assumed that, as a case where z takes the maximum value, Cs₄W₁₁O_{z} is negatively charged in the -2 charge state as before the heat treatment. Because the valence of Cs is +1, considering the charge balance, it becomes 4×1 + 11×(95.03×6 + 4.97×5)/100 - 2×z = -2. Solving this gives z = 35.7. Similar calculation methods were adopted in the following examples.

The transmittance and reflectance of the obtained infrared-shielding film were evaluated using a spectrophotometer (U-4100 manufactured by Hitachi, Ltd.).

When the transmittance of light of the infrared-shielding film was measured, it was 84% at a wavelength of 500 nm, 38% at a wavelength of 1,300 nm, and 29% at a wavelength of 2,000 nm.

When the reflectance of light of the infrared-shielding film was measured, it was 28% at a wavelength of 1,300 nm and 56% at a wavelength of 2,000 nm.

That is, it was confirmed that the maximum value of the transmittance of light in the wavelength range of 400 nm or more and 780 nm or less was 50% or more, and that the maximum value of the reflectance of light in the wavelength range of 780 nm or more and 2,600 nm or less was 50% or more. Therefore, it was confirmed that the infrared-shielding film obtained in the present example has excellent infrared-shielding performance.

The evaluation results are presented in Table 1. The evaluation results for the following other examples are also presented in Table 1.

**[Table 1]**

| | FIRED PRODUCT | HYDROGEN-TYPE SUBSTANCE | | | | FILM CONFIGURATION | XPS | | | SPECTROSCOPY | | | | |
|---|---|---|---|---|---|---|---|---|---|---|---|---|---|---|
| | COMPOSITION | Cs | Rb | W | Cs/W Rb/W | | W6+ [%] | W5+ [%] | z | TRANSMITTANCE [%] | | | REFLECTANCE [%] | |
| | | | | | | | | | | WAVELENGTH 500 nm | WAVELENGTH 1300 nm | WAVELENGTH 2000 nm | WAVELENGTH 1300 nm | WAVELENGTH 2000 nm |
| EXAMPLE 1 | Cs₆W₁₁O₃₆ | 17 | - | 64 | 4/11 | Cs₄W₁₁O_{z} AND Ti_{0.87}O₂ | 95.03 | 4.97 | 35.7 | 84 | 38 | 29 | 28 | 56 |
| EXAMPLE 2 | CS₆W₁₁> Oss | 17 | - | 64 | 4/11 | Cs₄W₁₁O_{z} | 95.12 | 4.88 | 35.7 | 84 | 40 | 31 | 25 | 51 |
| EXAMPLE 3 | Cs₄W₁₁O₃₅ | 13 | - | 66 | 3/11 | Cs₃W₁₁O_{z} AND Ti_{0.87}O₂ | 93.67 | 6.33 | 34.7 | 84 | 36 | 26 | 32 | 57 |
| EXAMPLE 4 | Cs₄W₁₁O₃₅ | 13 | - | 66 | 3/11 | Cs₃W₁₁O_{z} | 93.15 | 6.85 | 34.6 | 84 | 37 | 28 | 30 | 55 |
| EXAMPLE 5 | Rb₄W₁₁O₃₅ | - | 9 | 70 | 3/11 | Rb₃W₁₁O_{z} AND Ti_{0.87}O₂ | 95.57 | 4.43 | 34.8 | 80 | 39 | 29 | 29 | 50 |
| EXAMPLE 6 | Bi₂W₂O₉ | - | - | 75 | - | W₂O_{z} AND Ti_{0.87}O₂ | 93.80 | 6.20 | 6.94 | 72 | 38 | 27 | 23 | 50 |
| EXAMPLE 7 | Cs₄W₁₁O₃₅ | 13 | - | 66 | 3/11 | Cs₃W₁₁O_{z} | 93.21 | 6.79 | 34.6 | 82 | 33 | 24 | 32 | 58 |
| EXAMPLE 8 | Cs₄W₁₁O₃₅ | 13 | - | 66 | 3/11 | Cs₃W₁₁O_{z} | - | - | - | 85 | 46 | 36 | 21 | 41 |

### [Example 2]

The series of coating operations in the first coating step according to Example 1 was repeated five times, and a precursor of an infrared-shielding film composed only of Cs₄W₁₁O₃₆ was prepared on the quartz substrate.

Then, through the same heat treatment step as that of Example 1, an infrared-shielding film according to Example 2 that includes a molecular film assembly including a molecular film composed of Cs₄W₁₁O_{z} (z<36) on one surface of the base material was obtained.

By evaluating the obtained molecular film assembly including the molecular film in the same manner as that of Example 1, it was confirmed that the molecular film was included in which the basic skeleton is a repeating structure of tungsten-oxygen octahedral blocks. Further, when analyzed by X-ray photoelectron spectroscopy, W⁶⁺ was 95.12% and W⁵⁺ was 4.88%, and it was confirmed that the composition of the molecular film constituting the molecular film assembly in the infrared-shielding film according to Example 2 was Cs₄W₁₁O_{35.7}. In calculating the oxygen amount z, it was assumed that Cs₄W₁₁O_{z} was negatively charged in the -2 charge state as before the heat treatment.

The transmittance and reflectance of the obtained infrared-shielding film were evaluated using the spectrophotometer (U-4100 manufactured by Hitachi, Ltd.).

When the transmittance of light of the infrared-shielding film was measured, it was 84% at a wavelength of 500 nm, 40% at a wavelength of 1,300 nm, and 31% at a wavelength of 2,000 nm.

When the reflectance of light of the infrared-shielding film was measured, it was 25% at a wavelength of 1,300 nm and 51% at a wavelength of 2,000 nm.

When the sheet resistance of the infrared-shielding film according to Example 2 was measured using a sheet resistance measuring machine (manufactured by Mitsubishi Chemical Corp., Loresta MP MCP-T350 or Hiresta IP MCP-HT260), it was 2.1×10⁷ Ω/□ (ohm-per-square).

### [Example 3]

### (Preparation of First Coating Liquid)

10.2 g of cesium carbonate and 40.0 g of tungsten (VI) oxide were mixed so that the molar ratio of Cs:W was 4:11, and firing was performed at 850°C for 5 hours in an air atmosphere. It was confirmed that Cs₄W₁₁O₃₅ was obtained from the powder X-ray diffraction pattern of the fired product. At the same time, it was also confirmed that the obtained Cs₄W₁₁O₃₅ had the basic skeleton being a repeating structure of tungsten-oxygen octahedral blocks.

0.5 g of the obtained Cs₄W₁₁O₃₅ was taken and added to 50 ml of 12N hydrochloric acid. Then, the acid treatment was performed by mixing and stirring for 1 day at room temperature, that is, without heat treatment such as heating or cooling. After removing the hydrochloric acid by decantation, the hydrochloric acid was replaced with new hydrochloric acid, and the same acid treatment was performed for an additional 2 days (acid treatment for a total of 3 days). By filtration, washing with water, and air-drying, a solid residue, which was the acid treated product, was recovered (acid treatment step).

When the Cs and W concentrations of the obtained solid residue were analyzed by the ICP optical emission spectrometer (manufactured by Shimadzu Corporation, model ICPE-9000), they were 13wt% and 66wt%, respectively. The chemical formula was calculated from the results, and it was confirmed that the solid residue had a molar ratio of Cs/W = 3/11.

To 0.4 g of the obtained solid residue, 100 cm³ of 0.0016 mol/l tetrabutylammonium hydroxide aqueous solution was added. After mixing and stirring at 200 rpm for 14 days, the sedimentation component was removed by centrifugation. As a result, a dispersion liquid containing a molecular film of Cs₃W₁₁O₃₅⁻, which was the first coating liquid according to Example 3, was obtained (colloidal step). Here, the molecular film is obtained in a negatively charged state, but the surface of the molecular film is modified to TBA⁺ of tetrabutylammonium ion, and it is considered that the overall state is close to neutral.

The obtained dispersion liquid containing the molecular film of Cs₃W₁₁O₃₅⁻ was dropped on a microgrid for transmission electron microscopy, and the molecular film was transferred to observe the morphology using the transmission electron microscope. It was confirmed that the average length of the molecular film in the longitudinal direction was 5 um for ten molecular films subjected to morphological observation. When the crystal structure was analyzed from the electron diffraction pattern of the molecular film, it was confirmed that the obtained molecular film was a molecular film having the basic skeleton being a repeating structure of tungsten-oxygen octahedral blocks, similar to Cs₄W₁₁O₃₅ before acid treatment.

Except that the first coating liquid according to Example 3 was used instead of the first coating liquid according to Example 1, an infrared-shielding film according to Example 3 that includes a molecular film assembly including a molecular film composed of Cs₃W₁₁O_{z} (z<35) and a high refractive index material, was obtained in the same manner as in Example 1. In the process, when the first coating step was completed, it was confirmed that the molecular film assembly, which was a coating film of a molecular film formed on the quartz substrate, included a molecular film having the basic skeleton being a repeating structure of tungsten-oxygen octahedral blocks as a main component of the crystalline material.

By evaluating in the same manner as in Example 1, it was also confirmed that the infrared-shielding film according to Example 3 included a molecular film assembly including a molecular film having the basic skeleton being a repeating structure of tungsten-oxygen octahedral blocks and a high refractive index material. Further, when analyzed by X-ray photoelectron spectroscopy, W⁶⁺ was 93.67% and W⁵⁺ was 6.33%, and it was confirmed that the composition of the molecular film constituting the molecular film assembly in the infrared-shielding film according to Example 3 was Cs₃W₁₁O_{34.7}. In calculating the oxygen amount z, it was assumed that Cs₃W₁₁O_{z} was negatively charged in the -1 charge state as before the heat treatment.

The transmittance and reflectance of the infrared-shielding film according to Example 3 were evaluated using the spectrophotometer.

When the transmittance of light of the infrared-shielding film was measured, it was 84% at a wavelength of 500 nm, 36% at a wavelength of 1,300 nm, and 26% at a wavelength of 2,000 nm.

When the reflectance of light of the infrared-shielding film was measured, it was 32% at a wavelength of 1,300 nm and 57% at a wavelength of 2,000 nm.

### [Example 4]

The series of coating operations in the first coating step according to Example 3 was repeated five times, and a precursor of an infrared-shielding film composed only of Cs₃W₁₁O₃₅ was prepared on the quartz substrate.

Then, through the same heat treatment step as that of Example 3, an infrared-shielding film according to Example 4 that includes a molecular film assembly including a molecular film composed of Cs₃W₁₁O_{z} (z<35) on one surface of the base material was obtained.

By evaluating the obtained molecular film assembly including the molecular film in the same manner as that of Example 1, it was confirmed that the molecular film was included in which the basic skeleton is a repeating structure of tungsten-oxygen octahedral blocks. Further, when analyzed by X-ray photoelectron spectroscopy, W⁶⁺ was 93.15% and W⁵⁺ was 6.85%, and it was confirmed that the composition of the molecular film constituting the molecular film assembly in the infrared-shielding film according to Example 4 was Cs₃W₁₁O_{34.6}. In calculating the oxygen amount z, it was assumed that Cs₃W₁₁O_{z} was negatively charged in the -1 charge state as before the heat treatment.

The transmittance and reflectance of the obtained infrared-shielding film were evaluated using the spectrophotometer (U-4100 manufactured by Hitachi, Ltd.).

When the transmittance of light of the infrared-shielding film was measured, it was 84% at a wavelength of 500 nm, 37% at a wavelength of 1,300 nm, and 28% at a wavelength of 2,000 nm.

When the reflectance of light of the infrared-shielding film was measured, it was 30% at a wavelength of 1,300 nm and 55% at a wavelength of 2,000 nm.

When the sheet resistance of the infrared-shielding film according to Example 4 was measured, it was 4.3×10⁷ Ω/□ (ohm-per-square).

### [Example 5]

7.24 g of rubidium carbonate was used instead of 10.2 g of cesium carbonate. Further, acid treatment was performed for 10 days instead of 3 days, and 100 cm³ of 0.0014 mol/l tetrabutylammonium hydroxide solution was used instead of 100 cm³ of 0.0016 mol/l tetrabutylammonium hydroxide solution. Except for the above points, Rb₄W₁₁O₃₅ having the basic skeleton being a repeating structure of tungsten-oxygen octahedral blocks was synthesized in the same manner as in Example 3. Except for the point that the synthesized Rb₄W₁₁O₃₅ was used, a dispersion liquid containing a molecular film of Rb₃W₁₁O₃₅⁻ was obtained as a first coating liquid according to Example 5 in the same manner as in Example 3. Except for the point that the first coating liquid according to Example 5 was used, an infrared-shielding film according to Example 5 that includes a molecular film assembly including a molecular film of Rb₃W₁₁O_{z} (z<35) and a high refractive index material was prepared in the same manner as Example 3. When the solid residue, which was the acid treated product, was recovered, the Rb and W concentrations were analyzed, and they were 9wt% and 70wt%, respectively. The chemical formula was calculated from the results, and it was confirmed that the solid residue had a molar ratio of Rb/W = 3/11.

By evaluating in the same manner as in Example 1, it was also confirmed that the infrared-shielding film according to Example 5 included a molecular film assembly including a molecular film having the basic skeleton being a repeating structure of tungsten-oxygen octahedral blocks and a high refractive index material. Further, when analyzed by X-ray photoelectron spectroscopy, W⁶⁺ was 95.57% and W⁵⁺ was 4.43%, and it was confirmed that the composition of the molecular film constituting the molecular film assembly in the infrared-shielding film according to Example 5 was Rb₃W₁₁O_{34.8}. In calculating the oxygen amount z, it was assumed that Rb₃W₁₁O_{z} was negatively charged in the -1 charge state as before the heat treatment.

The transmittance and reflectance of the infrared-shielding film according to Example 5 were evaluated using the spectrophotometer.

When the transmittance of light of the infrared-shielding film was measured, it was 80% at a wavelength of 500 nm, 39% at a wavelength of 1,300 nm, and 29% at a wavelength of 2,000 nm.

When the reflectance of light of the infrared-shielding film was measured, it was 29% at a wavelength of 1,300 nm and 50% at a wavelength of 2,000 nm.

### [Example 6]

5.01 g of bismuth oxide (III) and 4.99 g of tungsten oxide (VI) were mixed, and heat treatment was performed at 700°C for 5 hours in an air atmosphere. It was confirmed that Bi₂W₂O₉ was obtained from the powder X-ray diffraction pattern of the fired product.

0.5 g of the obtained Bi₂W₂O₉ was taken and added to 50 ml of 6N hydrochloric acid. Then, the acid treatment was performed by mixing and stirring for 3 days at room temperature, that is, without heat treatment such as heating or cooling. After removing the hydrochloric acid by filtration, the hydrochloric acid was replaced with new hydrochloric acid, and the same acid treatment was performed for an additional 4 days. By decantation, washing with water, and air-drying, a solid residue, which was the acid treatment product, was recovered (acid treatment step).

When the W concentration of the obtained solid residue was analyzed, it was 75wt%. Bi was not detected.

Except that 100 cm³ of a 0.017 mol/l tetrabutylammonium hydroxide aqueous solution was added to 0.4 g of the obtained solid residue, a dispersion liquid containing a molecular film of W₂O₇²⁻, which was the first coating liquid according to Example 6, was obtained in the same manner as in Example 1 (colloidal step). Except that the first coating liquid according to Example 6 was used, an infrared-shielding film according to Example 6 that includes a molecular film assembly including a molecular film composed of W₂O_{z} (z<7) and a high refractive index material was prepared in the same manner as in Example 1.

By evaluating in the same manner as in Example 1, it was also confirmed that the infrared-shielding film according to Example 6 included a molecular film assembly including a molecular film having the basic skeleton being a repeating structure of tungsten-oxygen octahedral blocks and a high refractive index material. Further, when analyzed by X-ray photoelectron spectroscopy, W⁶⁺ was 93.80% and W⁵⁺ was 6.20%, and it was confirmed that the composition of the molecular film constituting the molecular film assembly in the infrared-shielding film according to Example 6 was W₂O_{6.94}. In calculating the composition, it was assumed that W₂O_{z} was negatively charged in the -2 charge state as before the heat treatment.

The transmittance and reflectance of the infrared-shielding film according to Example 6 were evaluated using the spectrophotometer.

When the transmittance of light of the infrared-shielding film was measured, it was 72% at a wavelength of 500 nm, 38% at a wavelength of 1,300 nm, and 27% at a wavelength of 2,000 nm.

When the reflectance of light of the infrared-shielding film was measured, it was 23% at a wavelength of 1,300 nm and 50% at a wavelength of 2,000 nm.

### [Example 7]

A first coating liquid according to Example 7 was prepared by mixing 0.25 ml of the first coating liquid according to Example 3, 3.5 ml of pure water, and 0.042 ml of ethanol. Using the first coating liquid, a coating operation was performed by the single droplet assembly. After heating the quartz substrate to a temperature of 120°C on a hot plate, the first coating liquid according to Example 7 was dropped onto the substrate and slowly sucked up with a pipette, so that a molecular film assembly composed of Cs₃W₁₁O₃₅⁻ was prepared on the quartz substrate.

The surface of the molecular film assembly composed of Cs₃W₁₁O₃₅⁻ prepared on the quartz substrate was observed using an atomic force microscope AFM (AFM5100N manufactured by Hitachi High-Tech Corporation). FIG. 6A illustrates an AFM image, and FIG. 6B illustrates a cross-sectional profile at the X1-Y1 line in FIG. 6A. From FIG. 6A, it was found that a coating film of a molecular film having a size of about 100 to 1,000 nm in the plane direction was obtained all over the substrate with almost no gap. From FIG. 6B, it was found that the thickness of the molecular film in the cross-sectional direction was about 3 nm.

Then, through the same heat treatment step as that of Example 3, the AFM image was observed. FIG. 7A illustrates an AFM image after the heat treatment, and FIG. 7B illustrates a cross-sectional profile at the X2-Y2 line in FIG. 7A. From FIG. 7A, it was found that the coating film of the molecular film having the size of about 100 to 1,000 nm in the plane direction was obtained all over the substrate with almost no gap, as before the heat treatment. From FIG. 7B, it was found that the thickness of the molecular film in the cross-sectional direction was about 3 nm.

After an additional 4 times of the coating step, through a heat treatment step similar to that of Example 3, an infrared-shielding film according to Example 7 that includes a molecular film assembly including a molecular film composed of Cs₃W₁₁O_{z} (z<35) was obtained on one surface of the base material. In the process, when the first coating step was completed, it was confirmed that the coating film of the molecular film formed on the quartz substrate included a molecular film having the basic skeleton being a repeating structure of tungsten-oxygen octahedral blocks as a main component of the crystalline material.

By evaluating the obtained molecular film assembly including the molecular film in the same manner as in Example 1, it was confirmed that the molecular film was included in which the basic skeleton is a repeating structure of tungsten-oxygen octahedral blocks. Further, when analyzed by X-ray photoelectron spectroscopy, W⁶⁺ was 93.21% and W⁵⁺ was 6.79%, and it was confirmed that the composition of the molecular film constituting the molecular film assembly in the infrared-shielding film according to Example 7 was Cs₃W₁₁O_{34.6}. In calculating the composition, it was assumed that Cs₃W₁₁O_{z} was negatively charged in the -1 charge state as before the heat treatment.

The transmittance and reflectance of the infrared-shielding film according to Example 7 were evaluated using the spectrophotometer. When the transmittance of light of the infrared-shielding film was measured, it was 82% at a wavelength of 500 nm, 33% at a wavelength of 1,300 nm, and 24% at a wavelength of 2,000 nm.

When the reflectance of the light of the infrared-shielding film was measured, it was 32% at a wavelength of 1,300 nm and 58% at a wavelength of 2,000 nm.

When the sheet resistance of the infrared-shielding film according to Example 7 was measured, it was 3.6×10⁷ Ω/□ (ohm-per-square).

### [Example 8]

First, the solvent of the first coating liquid according to Example 3 was replaced with toluene. To 30 ml of the first coating liquid according to Example 3, 3 ml of toluene and 90 ml of methanol were added, and the solvent was evaporated to a liquid volume of 6 ml using an evaporator. Then, 30 ml of toluene and 90 ml of methanol were added, and the solvent was evaporated to a liquid volume of 6 ml in the same manner. Then, 90 ml of toluene and 30 ml of methanol were added, and the solvent was evaporated to a liquid volume of 6 ml in the same manner. Then, 120 ml of toluene and 0.4 g of a polymer dispersant were added, the solvent (mostly toluene) was evaporated to 2 mass%, and a powder containing a molecular film according to Example 8 was obtained. As the polymer dispersant, a modified acrylic block copolymer having a group containing amine as a functional group was used.

1,000 parts by mass of a polyethylene terephthalate resin pellet and 10 parts by mass of a phosphorus-based antioxidant having reducing action were mixed with 100 parts by mass of the obtained powder containing the molecular film. The mixture was melt-kneaded using a twin-screw extruder to obtain a kneaded product, which was extruded into a string to obtain a string-shaped material. The melting temperature at the time of the melt-kneading was 270°C. At this time, the string-shaped material was colored blue by the melt-kneading, suggesting that oxygen defects were introduced into the molecular film by the reducing action of the phosphorus-based antioxidant.

The obtained string-shaped material was cut into pellets with a length of 4 mm, and a master batch was obtained.

The obtained master batch was put into a single-screw extruder at 270°C, and then extruded onto a cooling roll with circulating refrigerant at a temperature of 65°C by melt extrusion molding using a T-die, and a sheet with a thickness of 300 um was obtained. The obtained sheet was cut into 5 cm squares and biaxially stretched to form a film having a thickness of 40 um to obtain a structure according to Example 8 in which polyethylene terephthalate is a matrix and a molecular film is a filler, having an infrared-shielding function.

The transmittance and reflectance of the structure according to Example 8 were evaluated using the spectrophotometer. When the light transmittance of the structure was measured, it was 85% at a wavelength of 500 nm, 46% at a wavelength of 1,300 nm, and 36% at a wavelength of 2,000 nm.

When the light reflectance of the infrared-shielding film was measured, it was 21% at a wavelength of 1,300 nm and 41% at a wavelength of 2,000 nm.

Next, the structure according to Example 8 was colored by UV irradiation for 20 minutes using a UV conveyor device (ECS-401GX, manufactured by Eye Graphics Company). At this time, a mercury lamp having a main wavelength at 365 nm was used as the UV source in the UV conveyor device, and the UV irradiation intensity was set to 100 mW/cm². Then, the transmittance was measured using the spectrophotometer as before the irradiation. It was 81% at a wavelength of 500 nm, 37% at a wavelength of 1,300 nm, and 27% at a wavelength of 2,000 nm, exhibiting high chromic characteristics.

The present application claims priority to Japanese Patent Application No. 2021-178333, filed October 29, 2021, with the Japanese Patent Office, the contents of which are incorporated herein by reference in their entirety.

### Description of the Reference Numeral

- 11: Tungsten-oxygen octahedral block
- 12: Void
- 13: M
- 31: Layer
- 32: Plane
- 61A, 61B, 71A, 71B: Molecular film
- 62, 72: Gap
- 80, 90, 100, 110: Infrared-shielding film
- 81: Base material
- 81A: One surface
- 81B: The other surface
- 82: Molecular film assembly
- 83: High refractive index material
- 91: Laminated structure
- 101, 161: Infrared-shielding material particle
- 120, 130, 140, 150, 160: Structure
- 121: Infrared shield
- 122: Matrix
- 141: Base material

## Claims

1. A molecular film comprising:
a tungsten-oxygen octahedral block.

2. The molecular film according to claim 1, including a composite tungsten oxide represented by a general formula MₓW_{y}O_{z} where M is one or more components selected from a group of elements including H, B, C, N, F, Li, Na, K, Rb, Cs, Fr, Ca, Sr, Ba, Ra, Sc, Y, La, Ce, Pr, Nd, Pm, Sm, Eu, Gd, Tb, Dy, Ho, Er, Tm, Yb, Lu, Be, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, P, S, Se, Cl, Br, I, Te, Ti, Nb, V, Mo, Ta, Re, Hf, Os, and Bi, and a group of atomic groups including Bi₂O₂, OH, H₂O, and H₃O; W is tungsten; O is oxygen; 0.001≤x/y≤1; and 2.0≤z/y≤3.5.

3. The molecular film according to claim 2, wherein
M includes one or more elements selected from H, Li, Na, K, Rb, Cs, Fr, Ca, Sr, Ba, Fe, Cu, Ag, In, Tl, Sn, Pb, and Yb.

4. The molecular film according to claim 2 or 3, wherein
M includes one or more elements selected from Cs and Rb.

5. The molecular film according to any one of claims 1 to 4, including a tungsten oxide represented by a general formula W_{y}O_{z} where W is tungsten; O is oxygen; and 2.0≤z/y<3.5.

6. The molecular film according to any one of claims 1 to 5, having chromic characteristics.

7. A molecular film assembly comprising:
the molecular film of any one of claims 1 to 6.

8. An infrared-shielding film comprising:
the molecular film assembly of claim 7.

9. An infrared-shielding film comprising:
a base material, and
the molecular film assembly of claim 7 provided on the base material.

10. The infrared-shielding film according to claim 9, wherein the base material includes one or more materials selected from a single crystal material, a polycrystal material, a glass, a metal, an alloy, a ceramic, and a resin.

11. The infrared-shielding film according to any one of claims 8 to 10, having a laminated structure.

12. The infrared-shielding film according to claim 11, including a high refractive index material as part of the laminated structure.

13. The infrared-shielding film according to claim 12, wherein the high refractive index material is one or more materials selected from titanium oxide, manganese oxide, tantalum oxide, niobium oxide, titanate, tantalate, niobate, and boron nitride.

14. The infrared-shielding film according to any one of claims 8 to 13, wherein a maximum value of transmittance of light in a wavelength range of 400 nm or more and 780 nm or less is 50% or more, and a maximum value of reflectance of light in a wavelength range of 780 nm or more and 2,600 nm or less is 50% or more.

15. A structure comprising:
the molecular film of any one of claims 1 to 6.

16. The structure according to claim 15, including:
a matrix, and
the molecular film provided in the matrix.

## Amended claims

Statement under Art. 19.1 PCT
1. Content of Amendment
(1) The configuration of claim 2 is incorporated into claim 1, and the limitation "wherein the tungsten-oxygen octahedral block includes an oxygen defect" is added to claim 1.
(2) Claims 2 and 5 are removed.
(3) Cited claim numbers in claims 3, 4, 6, 7, and 15 are amended.

2. Explanation
 In none of Document 1 (JP 2012-140255 A), Document 2 (FUKUDA, K. et al., Inorganic Chemistry, 2011.12.22, Vol.51, pp. 1540-1543), Document 3 (WO 2017/161423 A1), and Document 5 (JP 2016-109872A) described or suggested that the tungsten-oxygen octahedral block includes an oxygen defect.
 In addition, Document 4 (CN 106745276 A) does not disclose a molecular film including a composite tungsten oxide.
